# EUROPEAN PATENT SPECIFICATION

(11) **EP 3 527 019 B1**
(45) Date of publication and mention of the grant of the patent: **29.11.2023**
(21) Application number: 17771921.8
(22) Date of filing: 01.09.2017
(51) Int. Cl.: H04L 5/00, H04W 72/21, H04L 1/00, H04W 52/32, H04W 52/34, H04W 52/36, H04W 72/0446

(54) **CONCURRENT TRANSMISSION OF LOW LATENCY AND NON-LOW LATENCY UPLINK CONTROL CHANNELS**
GLEICHZEITIGE ÜBERTRAGUNG VON UPLINK-STEUERKANÄLEN MIT NIEDRIGER LATENZ UND MIT NICHT NIEDRIGER LATENZ
TRANSMISSION SIMULTANÉE DE CANAUX DE COMMANDE DE LIAISON MONTANTE À FAIBLE LATENCE ET À LATENCE NON FAIBLE

(30) Priority: 13.10.2016 US 201662408011 P; 31.08.2017 US 201715692137
(43) Date of publication of application: 21.08.2019
(73) Proprietor: QUALCOMM Incorporated, San Diego, CA 92121-1714 (US)
(72) Inventor: CHEN, Wanshi, San Diego, California 92121-1714 (US); HOSSEINI, Seyedkianoush, San Diego, California 92121-1714 (US); GAAL, Peter, San Diego, California 92121-1714 (US); SUN, Jing, San Diego, California 92121-1714 (US); PATEL, Shimman Arvind, San Diego, California 92121-1714 (US)
(74) Representative: Bardehle Pagenberg Partnerschaft mbB Patentanwälte Rechtsanwälte
(86) International application number: PCT/US2017/049952
(87) International publication number: WO 2018/071110

(56) References cited:
- WO-A1-2015/116866
- WO-A1-2017/165198
- ERICSSON: "Handling overlapping allocations with short and 1 ms TTI", 3GPP DRAFT; R1-1610335, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051150350, Retrieved from the Internet: URL:http://www.3gpp.org/ftp/Meetings_3GPP_ SYNC/RAN1/Docs/ [retrieved on 2016-10-09]
- CATT: "Discussion on the simultaneous transmissions of (s)PUCCH and (s)PUSCH", 3GPP DRAFT; R1-1608751, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 9 October 2016 (2016-10-09), XP051148807, Retrieved from the Internet: URL:http://www.3gpp.org/ftp/Meetings_3GPP_ SYNC/RAN1/Docs/ [retrieved on 2016-10-09]
- HUAWEI ET AL: "Discussion on CSI feedback for short TTI", 3GPP DRAFT; R1-1608642, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051148701, Retrieved from the Internet: URL:http://www.3gpp.org/ftp/Meetings_3GPP_ SYNC/RAN1/Docs/ [retrieved on 2016-10-09]

## Description

### CROSS REFERENCES

The present Application for Patent claims priority to U.S. Patent Application No. 15/692,137 by Chen et al., entitled "Concurrent Transmission of Low Latency and Non-Low Latency Uplink Control Channels," filed August 31, 2017; and U.S. Provisional Patent Application No. 62/408,011 by Chen et al., entitled "Concurrent Transmission of Low Latency and Non-Low Latency Uplink Control Channels," filed October 13, 2016; each of which is assigned to the assignee hereof.

### BACKGROUND

The following relates generally to wireless communication in a system that supports a first transmission time interval (TTI) duration and a second TTI duration that is less than the first TTI duration and more specifically to concurrent transmission of low latency and non-low latency uplink control channels.

Wireless communications systems are widely deployed to provide various types of communication content such as voice, video, packet data, messaging, broadcast, and so on. These systems may be capable of supporting communication with multiple users by sharing the available system resources (*e.g.,* time, frequency, and power). Examples of such multiple-access systems include code division multiple access (CDMA) systems, time division multiple access (TDMA) systems, frequency division multiple access (FDMA) systems, and orthogonal frequency division multiple access (OFDMA) systems, (*e.g.,* a Long Term Evolution (LTE) system). A wireless multiple-access communications system may include a number of base stations, each simultaneously supporting communication for multiple communication devices, which may be otherwise known as user equipment (UE).

Wireless multiple-access technologies have been adopted in various telecommunication standards to provide a common protocol that enables different wireless devices to communicate on a municipal, national, regional, and even global level. An example telecommunication standard is Long Term Evolution (LTE). LTE is designed to improve spectral efficiency, lower costs, improve services, make use of new spectrum, and better integrate with other open standards. LTE may use OFDMA on the downlink, singlecarrier frequency division multiple access (SC-FDMA) on the uplink, and multiple-input multiple-output (MIMO) antenna technology

A UE may be scheduled for uplink transmissions on more than one channel, which may result in a collision between the uplink transmissions, as for example described in 3GPP R1-1610335. Left unresolved, these collisions of uplink transmissions may reduce throughput on one or more of the channels or may affect the UE's ability to operate within defined transmission power parameters. Further document 3GPP R1-1608751 discusses simultaneous transmissions of (s)PUCCH and (s)PUSCH.

### SUMMARY

In accordance with the present invention, methods and apparatuses for a user equipment and a base station, as set forth in the independent claims, respectively, are provided. Additional embodiments of the invention are described in the dependent claims.

### BRIEF DESCRIPTION OF THE DRAWINGS

FIG. 1 illustrates an example of a system for wireless communication that supports concurrent transmission of low latency and non-low latency uplink control channels.
FIG. 2 illustrates an example of a wireless communications system that supports concurrent transmission of low latency and non-low latency uplink control channels.
FIG. 3 illustrates an example of a process flow in a system that supports concurrent transmission of low latency and non-low latency uplink control channels.
FIGs. 4 through 6 show block diagrams of a device or devices that support concurrent transmission of low latency and non-low latency uplink control channels.
FIG. 7 illustrates a block diagram of a system, including a user equipment (UE), that supports concurrent transmission of low latency and non-low latency uplink control channels.
FIGs. 8 through 10 show block diagrams of a device or devices that support concurrent transmission of low latency and non-low latency uplink control channels.
FIG. 11 illustrates a block diagram of a system, including a base station, that supports concurrent transmission of low latency and non-low latency uplink control channels.
FIGs. 12 through 17 illustrate methods for concurrent transmission of low latency and non-low latency uplink control channels.

### DETAILED DESCRIPTION

A user equipment (UE) may resolve collisions between low latency and non-low latency uplink transmissions. When the UE identifies an overlap between scheduled or expected transmissions of low latency uplink control information and non-low latency uplink control information, the UE may determine whether and how to transmit according to the UE's configuration, capability for concurrent uplink transmissions, transmission power requirements, criticality of uplink information, or the like.

By way of example, a UE may be configured for low latency and non-low latency communication with a base station. The UE may use a first transmission time interval (TTI) for the non-low latency communication and a second TTI (*e.g.,* a shortened TTI (sTTI or uTTI)) for the low latency communication, where the sTTI has a duration less than a duration of the first TTI. The first duration TTI (*i.e.,* the longer duration TTI) may have a legacy configuration-*e.g*., the longer duration TTI may have a numerology that is based on an earlier release of a standard, such as LTE. The sTTI may employ a different numerology, which may be compatible with the numerology of the longer duration TTI.

The low latency communication may have different hybrid automatic repeat request (HARQ) feedback timing than the non-low latency communication, and the UE may be scheduled for overlapping uplink control information (UCI) transmissions (*e.g.,* HARQ feedback) on a legacy or non-low latency channel (*e.g.,* a physical uplink control channel (PUCCH)) and a low latency channel *(e.g.,* a shortened PUCCH (sPUCCH)). The UE may determine whether to transmit on PUCCH or on sPUCCH, or both concurrently.

In some cases, the UE may transmit on PUCCH and refrain from transmitting on sPUCCH. The UE may transmit low latency UCI (*i.e.,* UCI that is associated with communications that use a sTTI) on PUCCH or drop the low latency UCI. As per the invention, the UE may transmit on sPUCCH and refrain from transmitting on PUCCH. Low latency acknowledgment/negative acknowledgment (ACK/NACK) feedback (*e.g.,* HARQ feedback) and aperiodic channel state information (CSI) may be transmitted in a physical uplink shared channel (PUSCH). In some examples, when the UE refrains from transmitting PUCCH, the non-low latency information may be dropped. In other examples, the UE may transmit non-low latency HARQ feedback and aperiodic CSI on PUSCH. Then, the UE may transmit periodic CSI *(e.g.,* the entire periodic CSI or, as per the invention it transmits a portion of the periodic CSI) on sPUCCH based on a sTTI length or sPUCCH design. For example, the UE may transmit a full periodic CSI, contents of the periodic CSI *(e.g.,* a rank indicator (RI) or a precoding matrix indicator (PMI)), or may refrain from transmitting the periodic CSI at all. In other examples, the UE may transmit on PUCCH and sPUCCH concurrently.

The UE may split power between the PUCCH and sPUCCH such that the combined power of the two transmissions remains within a transmission power budget. In other examples, the UE may switch between transmitting on both channels concurrently and transmitting on one channel while refraining from transmitting on another channel. The switch may be configured by the base station.

Aspects of the disclosure introduced above are described below in the context of a wireless communications system. The wireless communication system may support concurrent transmission of low latency and non-low latency uplink control channels. Additional details about resolving collisions between concurrent transmissions and communications between a UE and base station in a system that supports concurrent transmission of low latency and non-low latency uplink control channels are described. Aspects of the disclosure are further illustrated by and described with reference to apparatus diagrams, system diagrams, and flowcharts that relate to concurrent transmission of low latency and non-low latency uplink control channels.

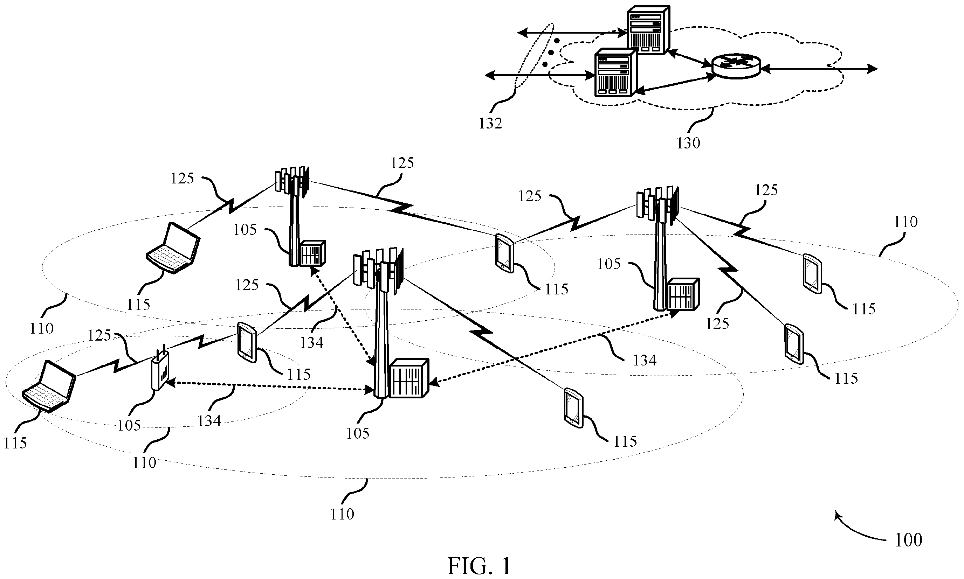

**FIG. 1** illustrates an example of a wireless communications system 100 in accordance with various aspects of the present disclosure. The wireless communications system 100 includes base stations 105, UEs 115, and a core network 130. In some examples, the wireless communications system 100 may be a LTE (or LTE-Advanced) network. The wireless communications system 100 may support concurrent transmission of low latency and non-low latency uplink control channels.

Base stations 105 may wirelessly communicate with UEs 115 via one or more base station antennas. Each base station 105 may provide communication coverage for a respective geographic coverage area 110. Communication links 125 shown in wireless communications system 100 may include uplink transmissions from a UE 115 to a base station 105, or downlink transmissions, from a base station 105 to a UE 115.

Base stations 105 may communicate with the core network 130 and with one another. For example, base stations 105 may interface with the core network 130 through backhaul links 132 *(e.g.,* S1, *etc.).* Base stations 105 may communicate with one another over backhaul links 134 *(e.g.,* X2, *etc.)* either directly or indirectly (*e.g.,* through core network 130). Base stations 105 may perform radio configuration and scheduling for communication with UEs 115, or may operate under the control of a base station controller (not shown). In some examples, base stations 105 may be macro cells, small cells, hot spots, or the like. Base stations 105 may also be referred to as eNodeBs (eNBs) 105.

UEs 115 may be dispersed throughout the wireless communications system 100, and each UE 115 may be stationary or mobile. A UE 115 may also be referred to as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

A UE 115 may be a cellular phone, a personal digital assistant (PDA), a wireless modem, a wireless communication device, a handheld device, a tablet computer, a laptop computer, a cordless phone, a personal electronic device, a handheld device, a personal computer, a wireless local loop (WLL) station, an Internet of things (IoT) device, an Internet of Everything (IoE) device, a machine type communication (MTC) device, an appliance, an automobile, or the like. UEs 115 may be configured for low latency and legacy or non-low latency communication with one or more base stations. Some UEs 115 may be configured for both low latency and non-low latency communication. A UE 115 may be scheduled to transmit UCI, such as HARQ feedback, on a low latency channel and on legacy or non-low latency channel (*e.g.,* a channel configured according earlier releases of LTE) at the same time. A UE 115 being scheduled to transmit low latency UCI and non-low latency UCI may result in reduced throughput for one or more of the channels.

Time resources within wireless communications system 100 may be organized according to radio frames of length of 10 ms, which may be identified by a system frame number (SFN) ranging from 0 to 1023. Each frame may include ten 1 ms subframes numbered from 0 to 9. A subframe may be further divided into two 0.5 ms slots, each of which contains 6 or 7 modulation symbol periods (based on the length of the cyclic prefix prepended to each symbol). Excluding the cyclic prefix, each symbol contains 2048 sample periods. In LTE, time intervals may be expressed in multiples of a basic time unit *(e.g.,* the sampling period, Ts = 1/30,720,000 seconds).

In some cases, the subframe may be the smallest scheduling unit, also known as a TTI. Wireless communications system 100 may also support TTIs that are shorter in duration than a subframe or may be dynamically selected (*e.g.,* in short TTI bursts or in selected component carriers using short TTIs (sTTI)). Short TTIs may have duration of one modulation symbol period, a duration of two modulation symbol periods, or a duration of one slot. Other durations may also be employed for sTTIs.

Wireless communications system 100 may employ HARQ, which is a method of ensuring that data is received correctly over a communication link 125. HARQ may include a combination of error detection (*e.g.,* using a cyclic redundancy check (CRC)), forward error correction (FEC), and retransmission (*e.g.,* automatic repeat request (ARQ)). HARQ may improve throughput at the medium access control (MAC) layer in poor radio conditions (*e.g.,* signal-to-noise conditions).

In Incremental Redundancy HARQ, incorrectly received data may be stored in a buffer and combined with subsequent transmissions to improve the overall likelihood of successfully decoding the data. In some cases, redundancy bits are added to each message prior to transmission. This may be especially useful in poor channel conditions. In other cases, redundancy bits are not added to each transmission, but are retransmitted after the transmitter of the original message receives a NACK indicating a failed attempt to decode the information.

The chain of transmission, response, and retransmission may be referred to as a HARQ process. In some cases, a limited number of HARQ processes may be used for a given communication link 125. Some communication configurations (*e.g.,* low latency communications) may have different HARQ feedback timing. Therefore, a UE 115 may be requested to transmit HARQ feedback at overlapping times on a low latency channel and a non-low latency channel.

Wireless communications system 100 may employ time division duplexing (TDD), which is a mode of bidirectional communication in which transmissions in each direction take place on the same carrier frequency but in different time slots. Wireless communications system 100 may also employ frequency division duplexing (FDD), which is a mode of bidirectional communication in which uplink and downlink communications use different frequency resources. Frame structures for FDD (*e.g.,* frame structure type 1) and TDD (*e.g.,* frame structure type 2) may be defined. In some cases, collisions between scheduled low latency and non-low latency uplink transmissions may be more or less based on the frame structure type used by wireless communications system 100.

CSI may include channel quality information (CQI), RI, and a PMI, which may be used to describe characteristics of a radio channel, for example, to indicate the complex transfer function matrix between one or more transmit antennas and one or more receive antennas. A base station 105 may request channel condition information from a UE 115 in order to efficiently configure and schedule the channel. This information may be sent from the UE 115 in the form of a channel state or CSI report.

A channel state report may contain an RI requesting a number of layers to be used for downlink transmissions (*e.g.,* based on the antenna ports of the UE 115), a PMI indicating a preference for which precoder matrix should be used (based on the number of layers), and a CQI representing the highest modulation and coding scheme (MCS) that may be used. CQI may be calculated by a UE 115 after receiving predetermined pilot symbols such as a cellspecific reference signal (CRS) or channel state information reference signal (CSI-RS). RI and PMI may be excluded if the UE 115 does not support spatial multiplexing (or is not in support spatial mode). The types of information included in the report may determine a reporting type. Channel state reports may be periodic or aperiodic. That is, a base station 105 may configure a UE 115 to send periodic reports at regular intervals, and may also request additional reports as needed. Aperiodic reports may include wideband reports indicating the channel quality across an entire cell bandwidth, UE selected reports indicating a subset of preferred subbands, or configured reports in which the subbands reported are selected by the base station 105.

UEs 115 may transmit UCI, such as uplink ACKs, scheduling requests (SRs), CQI, and other uplink control information, using PUCCH. PUCCH may be mapped to a control channel defined by a code and two consecutive resource blocks. Uplink control signaling may depend on the presence of timing synchronization for a cell. PUCCH resources for SR and CQI reporting may be assigned (and revoked) through radio resource control (RRC) signaling. In some cases, resources for SR may be assigned after acquiring synchronization through a random access channel (RACH) procedure. In other cases, a SR may not be assigned to a UE 115 through the RACH (*i.e*., synchronized UEs may or may not have a dedicated SR channel). PUCCH resources for SR and CQI may be lost when the UE 115 is no longer synchronized.

A UE 115 may transmit control information for low latency communications using sPUCCH, which may be mapped to a control channel that uses resources of a sTTI. If the UE 115 is scheduled for overlapping transmissions on a sPUCCH and a PUCCH, the UE 115 may determine to transmit on one uplink control channel and refrain from transmitting on another uplink control channel or the UE 115 may determine to concurrently transmit on PUCCH and sPUCCH.

A UE 115 or base station 105 may use transmit power control (TPC) parameters to set the transmission power, by either open-loop or closed-loop means. Transmit power control can be used to counteract propagation effects such as path-loss, shadowing or fast fading, or to control interference to neighboring cells. A UE 115 may coordinate transmit power with a serving base station to mitigate interference, improve uplink data rate, and prolong battery life.

Uplink power control may include a combination of open-loop and closed-loop mechanisms. In open-loop power control, the UE transmit power depends on estimates of the downlink path-loss and channel configuration. In closed-loop power control, the network can directly control the UE transmit power using explicit power-control commands. Open-loop power control may be used for initial access, whereas both open and closed-loop power control may be used for uplink control and data transmission. A UE 115 may determine a transmit power using an algorithm that takes into account a maximum transmission power limit, a target base station receive power, path loss, MCS, the number of resources used for transmission, and format of the transmitted data (*e.g.,* PUCCH format). Power adjustments may be made by a base station 105 using TPC messages, which may incrementally adjust the transmit power of a UE 115 as appropriate.

A UE 115 may transmit low latency UCI on PUCCH and refrain from transmitting on sPUCCH. Or, the UE 115 may transmit on sPUCCH and refrain from transmitting on PUCCH. The UE 115 may also optionally transmit non-low latency UCI on sPUCCH. Or in some cases, UE 115 may transmit both PUCCH and sPUCCH. As described further below, whether the UE 115 transmits on PUCCH or sPUCCH, or both, may depend on the configuration of the UE 115, capability for concurrent uplink transmissions, transmission power requirements, criticality of uplink information, or the like.

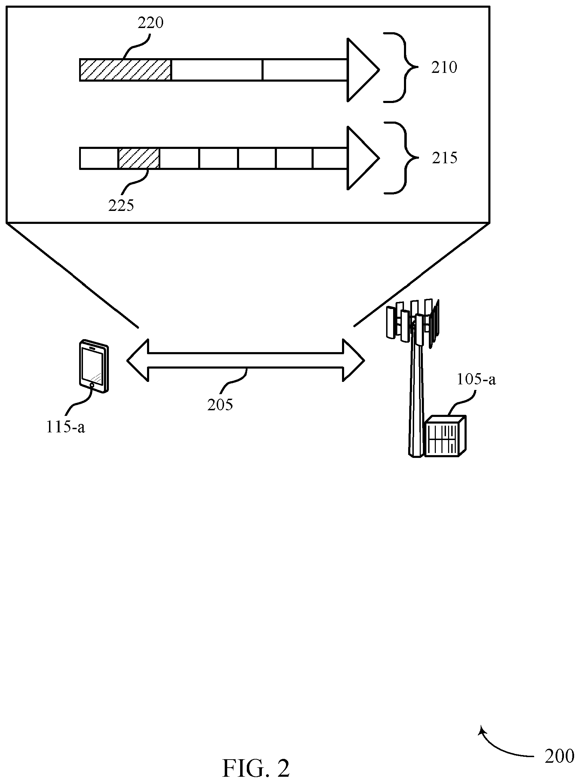

**FIG. 2** illustrates an example of a wireless communications system 200 for concurrent transmission of low latency and non-low latency uplink control channels. Wireless communications system 200 may include base station 105-a and UE 115-a, which may be examples of the corresponding devices described with reference to FIG. 1. Base station 105-a and UE 115-a may communicate over a communication link 205 that includes PUCCH 210 and sPUCCH 215. PUCCH 210 and sPUCCH 215 may be on the same or different carriers, and may be TDD or FDD.

UE 115-a or base station 105-a may be configured to operate using both low latency and non-low latency communications. Low latency and non-low latency communication may use different length TTIs and downlink HARQ timing. UE 115-a or base station 105-a may transmit using a TTI that has a shorter duration than another TTI, such as a non-low latency TTI 220. The relatively shorter TTI may be referred to as a low latency TTI or a sTTI 225 (or uTTI). The non-low latency TTI 220 may have a longer duration relative to sTTI 225. As mentioned above, non-low latency TTI 220 may also be referred to as a legacy TTI. For example, some earlier versions of a wireless communication standard, such as LTE, may employ such legacy TTIs. As described herein, non-low latency TTI 220 or legacy TTI may be an LTE subframe, and sTTI 225 may have a shorter duration of, for example, two symbol periods (*e.g.,* LTE symbol periods or orthogonal frequency division multiplexed (OFDM) symbol periods) or the duration of a slot (*e.g.,* an LTE slot).

Base station 105-a may transmit using a sTTI on a downlink channel, which may be designated or configured for low latency communication (*e.g.,* a shortened physical downlink control channel (sPDCCH) or a shortened physical downlink shared channel (sPDSCH)), and UE 115-a may transmit using sTTI 225 on an uplink channel, which may be designated or configured for low latency communication (*e.g.,* using sPUCCH 215 or a shortened physical uplink shared channel (sPUSCH)).

UE 115-a may transmit HARQ feedback in response to a received sTTI earlier than it would for non-low latency TTI. For example, the HARQ timing may be 2.5 ms for a one-slot sPDSCH transmission, while the HARQ timing for the non-low latency TTI (*e.g.,* a subframe) may be 4 ms for a physical downlink shared channel (PDSCH) transmission. In some cases, UE 115-a may communicate using both low latency and non-low latency systems, so UE 115-a may experience collisions between scheduled PUCCH 210 and sPUCCH 215 transmissions. For example, UE 115-a may be scheduled for overlapping PUCCH 210 and sPUCCH 215 transmissions due to different HARQ feedback timing of low latency and non-low latency communications. Low latency downlink transmissions may prompt UE 115-a for UCI faster than non-low latency downlink transmissions. Accordingly, UE 115-a may be scheduled to transmit the UCI *(e.g.,* HARQ feedback) on PUCCH 210 and sPUCCH 215 during an overlapping time period based on sPDSCH and PDSCH transmissions.

UE 115-a, scheduled for overlapping PUCCH 210 and sPUCCH 215 transmissions, may resolve a potential collision by transmitting UCI on PUCCH 210 and dropping (or refraining from transmitting) sPUCCH 215. UE 115-a may transmit low latency UCI (*e.g.,* UCI for communications that employ short TTIs (sUCI)) with non-low latency information on PUCCH 210. Thus, UE 115-a may transmit some information for low latency and non-low latency systems without using parallel transmission (*e.g.,* without concurrently transmitting on PUCCH 210 and sPUCCH 215). In other cases, UE 115-a may refrain from transmitting the low latency information.

In other examples, UE 115-a scheduled for PUCCH 210 and sPUCCH 215 transmissions may transmit UCI on sPUCCH 215 and drop (or refrain from transmitting) PUCCH 210. UE 115-a may transmit the low latency information, and may refrain from transmitting the non-low latency information until a later time. In some examples, UE 115-a may employ parallel transmissions on sPUCCH 215 and PUSCH. UE 115-a may transmit a non-low latency ACK or NACK and aperiodic CSI on PUSCH.

UE 115-a may semi-statically split power between the sPUCCH transmission and the PUSCH transmission to remain below a transmission power budget. If UE 115-a does not support parallel transmissions, UE 115-a may not transmit the non-low latency ACK/NACK and aperiodic CSI. In some cases, UE 115-a may transmit periodic CSI (P-CSI) on sPUCCH 215, where UE 115-a may transmit the full P-CSI or, in other examples, UE 115-a may transmit only some P-CSI contents *(e.g.,* a RI or a PMI).

UE 115-a may determine whether and how to transmit P-CSI based on the sPUCCH configuration or sTTI configuration. For example, UE 115-a may transmit non-low latency P-CSI on a two-symbol sPUCCH 215 if sPUCCH 215 can occupy multiple physical resource blocks (PRBs). In other cases, UE 115-a may not transmit any P-CSI. UE 115-a may determine whether to transmit P-CSI based on a length of sTTI 225. For example, UE 115-a may transmit P-CSI if sTTI 225 is relatively long *(e.g.,* a one-slot sTTI being relatively longer than a two-symbol sTTI) or may not transmit P-CSI if sTTI 225 is relatively short (*e.g.,* two-symbols).

In some examples, UE 115-a may transmit on PUCCH 210 and sPUCCH 215 concurrently. As mentioned above, UE 115-a may be scheduled for overlapping transmissions of low latency UCI and non-low latency UCI, for example, due to different HARQ feedback timing. For instance, UE 115-a may be scheduled for overlapping HARQ feedback transmissions for a sPDSCH and a PDSCH transmission. UE 115-a may semi-statically split transmission power between PUCCH 210 and sPUCCH 215 transmissions. For example, UE 115-a may transmit on PUCCH 210 at a configured number of decibels below a maximum available power budget. UE 115-a may then use the remaining power of the maximum available power budget to transmit on sPUCCH 215. Therefore, UE 115-a may maintain a total transmission power at or below the maximum available power budget. In some cases, base station 105-a may grant a PDSCH in a common search space (CSS), and UE 115-a may fallback to transmitting on PUCCH 210 and refrain from transmitting on sPUCCH 215. UE 115-a may then transmit PUCCH information at the maximum available power budget.

In some examples, UE 115-a may switch between concurrent transmission and transmitting on either PUCCH 210 or sPUCCH 215. UE 115-a may be scheduled for multiple overlapping low latency and non-low latency uplink control information transmissions. In some cases, UE 115-a may select a mode of operation based on various parameters (*e.g.,* channel usage parameters). For example, UE 115-a may switch transmission schemes based on traffic or load of different services. For example, UE 115-a may be configured for concurrent transmission, but UE 115-a may be in a poor coverage area or may not have a large enough maximum available power budget to transmit on both PUCCH 210 and sPUCCH 215 concurrently. UE 115-a may then either transmit on PUCCH 210 or sPUCCH 215, while refraining from transmitting on the other channel. Whether the UE 115-a transmits on a channel may be based on a configuration selected at, and provided by, base station 105-a.

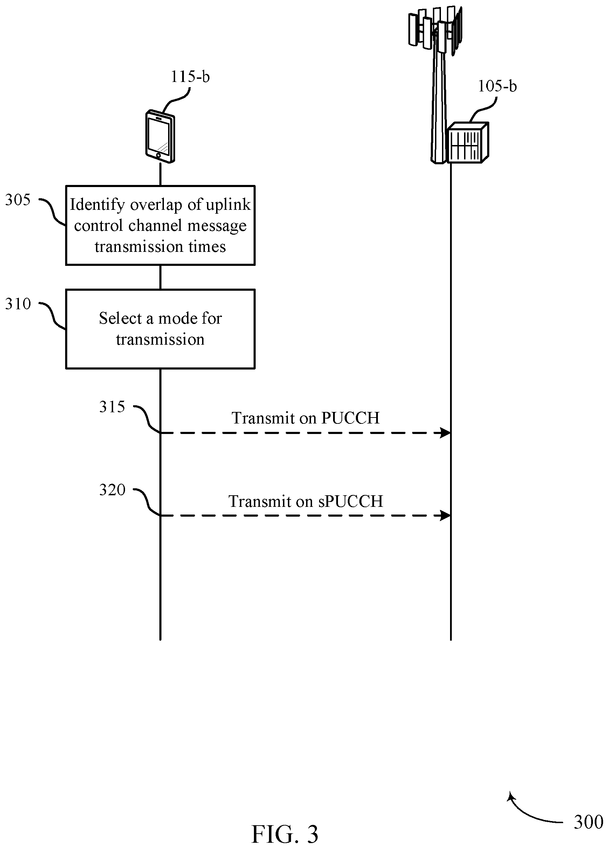

**FIG. 3** illustrates an example of a process flow 300 in a system that supports concurrent transmission of low latency and non-low latency uplink control channels. Process flow 300 may include base station 105-b and UE 115-b, which may be examples of a base station 105 and a UE 115 as described with reference to FIGs. 1 and 2.

At 305, UE 115-b may identify a first uplink control channel message for a first transmission time during a TTI having a first TTI duration. UE 115-b may identify a second uplink control channel message for a second transmission time during a TTI having a second TTI duration that is less than the first TTI duration (*e.g.,* the second TTI duration may be a time duration for a sTTI). The first uplink control channel message may be a non-low latency transmission on PUCCH, and the second uplink control channel message may be a low latency transmission on sPUCCH. UE 115-b may identify that the first transmission time overlaps with the second transmission time.

At 310, UE 115-b may select a mode for transmission. For example, UE 115-b may transmit on PUCCH, transmit on sPUCCH, or transmit on both using parallel transmissions. In some cases, UE 115-b may be configured by base station 105-b to transmit on PUCCH and/or sPUCCH. UE 115-b may thus select the mode for transmission based on a configuration provided by base station 105-b and/or on the identification of the overlap between the first and second transmission times. In the case of parallel transmissions, UE 115-b may semi-statically split power between the PUCCH and sPUCCH transmissions to keep the total transmission power below a maximum transmission power. In some cases, the splitting may be based on a power splitting parameter received from base station 105-b. In some cases, UE 115-b may select the mode for transmission based on a transmission power budget. Base station 105-b may also transmit a concurrent uplink transmission configuration to UE 115-b. In some cases, UE 115-b may select the mode for transmission based on the concurrent uplink transmission configuration.

At 315, UE 115-b may transmit on PUCCH to base station 105-b. For example, UE 115-b may transmit the first uplink control channel message on PUCCH. In some cases, UE 115-b may refrain from transmitting on sPUCCH, where UE 115-b may refrain from transmitting on sPUCCH, for example, based on an identified fallback operation condition.

At 320, UE 115-b may transmit on sPUCCH to base station 105-b. For example, UE 115-b may transmit the second uplink control channel message on sPUCCH. In the invention, UE 115-b refrains from transmitting on PUCCH. In some cases, UE 115-b may transmit HARQ acknowledgment feedback associated with the first TTI duration on an uplink shared channel (*e.g.,* PUSCH). UE 115-b may additionally or alternatively transmit CSI (*e.g.,* aperiodic CSI). In the invention, UE 115-b transmits a portion of a P-CSI report on sPUCCH. In some examples, UE 115-b may determine the portion of the P-CSI report to transmit based on the sTTI duration, the number of resource blocks used for transmission of the second uplink control channel message, or both.

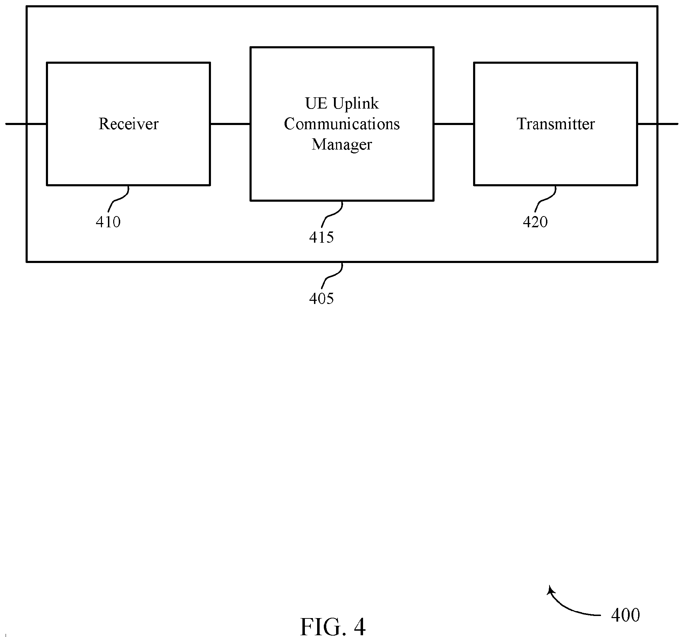

**FIG. 4** shows a block diagram 400 of a wireless device 405 that supports concurrent transmission of low latency and non-low latency uplink control channels in accordance with various aspects of the present disclosure. Wireless device 405 may be an example of aspects of a UE 115 as described with reference to FIG. 1. Wireless device 405 may include receiver 410, UE uplink communications manager 415, and transmitter 420. Wireless device 405 may also include a processor. Each of these components may be in communication with one another (*e.g.,* via one or more buses).

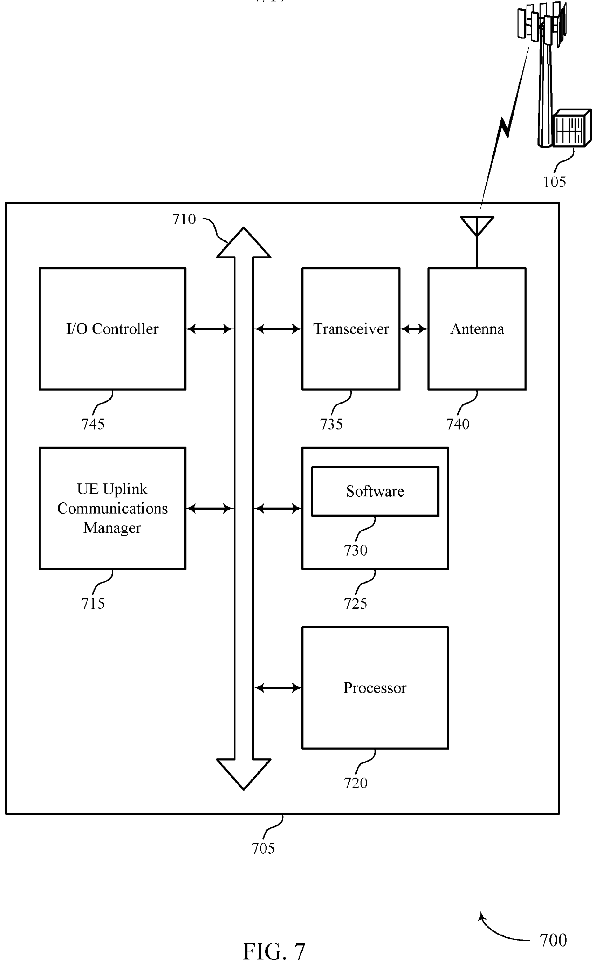

Receiver 410 may receive information such as packets, user data, or control information associated with various information channels (*e.g.,* control channels, data channels, and information related to concurrent transmission of low latency and non-low latency uplink control channels, *etc.).* Information may be passed on to other components of the device. The receiver 410 may be an example of aspects of the transceiver 735 described with reference to FIG. 7.

UE uplink communications manager 415 may be an example of aspects of the UE uplink communications manager 715 described with reference to FIG. 7. UE uplink communications manager 415 may identify a first uplink control channel message scheduled for a first transmission time during a TTI having the first TTI duration, identify a second uplink control channel message scheduled for a second transmission time during a TTI having the second TTI duration, and determine that the first transmission time overlaps with the second transmission time.

Transmitter 420 may transmit signals generated by other components of the device. For example, transmitter 420 may transmit the first uplink control channel message or the second uplink control channel message, or both, to a base station based on the determination (by the UE uplink communications manager 415) that the first transmission time overlaps with the second transmission time. In some examples, the transmitter 420 may be collocated with a receiver 410 in a transceiver module. For example, the transmitter 420 may be an example of aspects of the transceiver 735 described with reference to FIG. 7. The transmitter 420 may include a single antenna, or it may include a set of antennas.

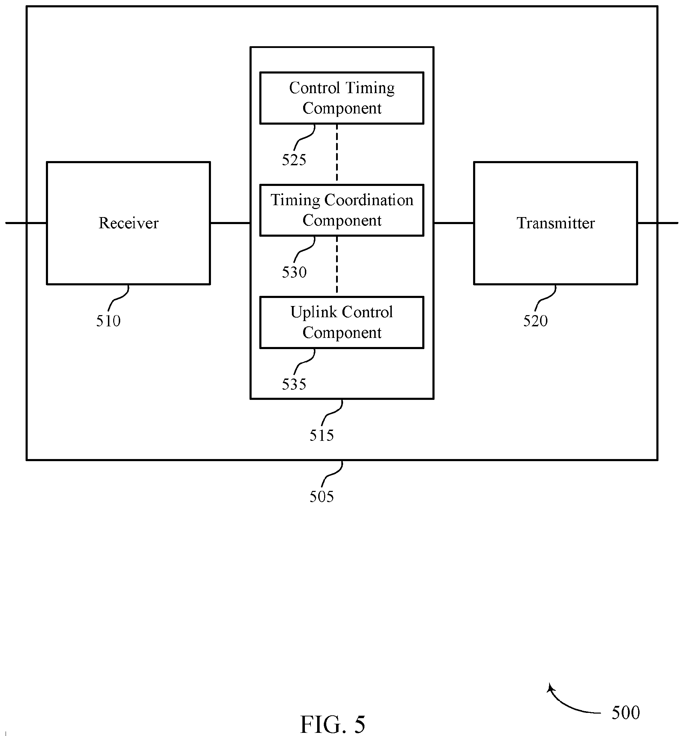

**FIG. 5** shows a block diagram 500 of a wireless device 505 that supports concurrent transmission of low latency and non-low latency uplink control channels in accordance with various aspects of the present disclosure. Wireless device 505 may be an example of aspects of a wireless device 405 or a UE 115 as described with reference to FIGs. 1 and 4. Wireless device 505 may include receiver 510, UE uplink communications manager 515, and transmitter 520. Wireless device 505 may also include a processor. Each of these components may be in communication with one another (*e.g.,* via one or more buses).

Receiver 510 may receive information such as packets, user data, or control information associated with various information channels (*e.g.,* control channels, data channels, and information related to concurrent transmission of low latency and non-low latency uplink control channels, *etc.).* Information may be passed on to other components of the device. The receiver 510 may be an example of aspects of the transceiver 735 described with reference to FIG. 7.

UE uplink communications manager 515 may be an example of aspects of the UE uplink communications manager 715 described with reference to FIG. 7. UE uplink communications manager 515 may also include control timing component 525, timing coordination component 530, and uplink control component 535.

Control timing component 525 may identify a first uplink control channel message scheduled for a first transmission time during a TTI having the first TTI duration and identify a second uplink control channel message scheduled for a second transmission time during a TTI having the second TTI duration. Timing coordination component 530 may determine that the first transmission time overlaps with the second transmission time.

Uplink control component 535 may, in combination with transmitter 520, transmit the first uplink control channel message or the second uplink control channel message, or both, to a base station 105 based on the determination that the first transmission time overlaps with the second transmission time and determine the portion of the P-CSI report to include in the second uplink control channel message based on the second TTI duration or a number of resource blocks used for transmission of the second uplink control channel message, or both. In some examples, the uplink control component 535 may, in combination with the transmitter 520, transmit on PUCCH or sPUCCH based on a configuration provided by the base station 105.

In the invention, the transmitting includes transmitting the second uplink control channel message and refraining from transmitting the first uplink control channel message based on the determination that the first transmission time overlaps with the second transmission time. In the invention, the second uplink control channel message includes at least a portion of a P-CSI report associated with the first TTI duration. Transmitting may include , although not according to the invention, transmitting the first uplink control channel message and refraining from transmitting the second uplink control channel message based on the determination that the first transmission time overlaps with the second transmission time.

Transmitter 520 may transmit signals generated by other components of the device. In some examples, the transmitter 520 may be collocated with a receiver 510 in a transceiver module. For example, the transmitter 520 may be an example of aspects of the transceiver 735 described with reference to FIG. 7. The transmitter 520 may include a single antenna, or it may include a set of antennas.

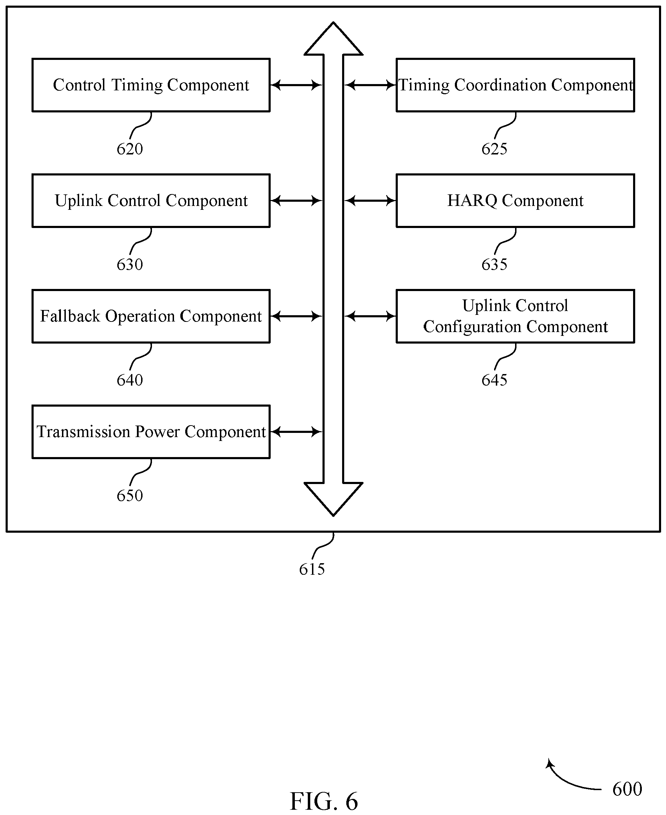

**FIG. 6** shows a block diagram 600 of a UE uplink communications manager 615 that supports concurrent transmission of low latency and non-low latency uplink control channels in accordance with various aspects of the present disclosure. The UE uplink communications manager 615 may be an example of aspects of a UE uplink communications manager 415, a UE uplink communications manager 515, or a UE uplink communications manager 715 described with reference to FIGs. 4, 5, and 7. The UE uplink communications manager 615 may include control timing component 620, timing coordination component 625, uplink control component 630, HARQ component 635, fallback operation component 640, uplink control configuration component 645, and transmission power component 650. Each of these modules may communicate, directly or indirectly, with one another (*e.g.,* via one or more buses).

Control timing component 620 may identify a first uplink control channel message scheduled for a first transmission time during a TTI having the first TTI duration and identify a second uplink control channel message scheduled for a second transmission time during a TTI having the second TTI duration. Timing coordination component 625 may determine that the first transmission time overlaps with the second transmission time. In some examples, UE uplink communications manager 615 may transmit on a channel based on a configuration from a base station and without specifically identifying an overlap between the first and second transmission times.

Uplink control component 630 may, in combination with transmitter 420 or transmitter 520, transmit the first uplink control channel message or the second uplink control channel message (the latter in the invention), or both, to a base station 105 based on the determination that the first transmission time overlaps with the second transmission time and may determine the portion of the P-CSI report to include in the second uplink control channel message based on the second TTI duration or a number of resource blocks used for transmission of the second uplink control channel message, or both.

Transmitting may include transmitting the second uplink control channel message and refraining from transmitting the first uplink control channel message based on the determination that the first transmission time overlaps with the second transmission time. In some cases, the second uplink control channel message includes at least a portion of a P-CSI report associated with the first TTI duration. In some cases, the transmitting includes transmitting the first uplink control channel message and refraining from transmitting the second uplink control channel message based on the determination that the first transmission time overlaps with the second transmission time.

HARQ component 635 may transmit the second uplink control channel message include transmitting HARQ acknowledgement feedback associated with the first TTI duration or an aperiodic CSI report associated with the first TTI duration, or both, on an uplink shared channel (*e.g.,* sPUSCH). In some examples, HARQ component 635 may transmit HARQ acknowledgment feedback associated with the first TTI duration on an uplink control channel *(e.g.,* sPUCCH), such as when UCI transmissions on PUCCH are dropped. Fallback operation component 640 may identify a fallback operation condition, where refraining from transmitting the second uplink control channel message is based on the fallback operation condition. Uplink control configuration component 645 may receive a concurrent uplink transmission configuration from the base station 105, where the transmitting is based on the concurrent uplink transmission configuration.

Transmission power component 650 may identify a maximum transmission power and identify a first transmission power and a second transmission power, where the first uplink control channel message is transmitted using the first transmission power, the second uplink control channel message is transmitted using the second transmission power, and a sum of the first transmission power and the second transmission power is less than or equal to the maximum transmission power. In some cases, transmission power component 650 may receive a power splitting parameter from the base station 105, where the first transmission power and the second transmission power are identified based on the power splitting parameter, and determine whether a transmission power budget is sufficient to transmit both the first uplink control channel message and the second uplink control channel message. In some cases, the transmitting may be based on whether the transmission power budget is sufficient to transmit both the first uplink control channel message and the second uplink control channel message.

**FIG. 7** shows a diagram of a system 700 including a device 705 that supports concurrent transmission of low latency and non-low latency uplink control channels in accordance with various aspects of the present disclosure. Device 705 may be an example of or include the components of wireless device 405, wireless device 505, or a UE 115 as described above, *e.g.,* with reference to FIGs. 1, 4 and 5. Device 705 may include components for bi-directional voice and data communications including components for transmitting and receiving communications, including UE uplink communications manager 715, processor 720, memory 725, software 730, transceiver 735, antenna 740, and I/O controller 745. These components may be in electronic communication via one or more busses (*e.g.,* bus 710). Device 705 may communicate wirelessly with one or more base stations 105.

Processor 720 may include an intelligent hardware device, (*e.g.,* a general-purpose processor, a digital signal processor (DSP), a central processing unit (CPU), a microcontroller, an application-specific integrated circuit (ASIC), an field-programmable gate array (FPGA), a programmable logic device, a discrete gate or transistor logic component, a discrete hardware component, or any combination thereof). In some cases, processor 720 may be configured to operate a memory array using a memory controller. In other cases, a memory controller may be integrated into processor 720. Processor 720 may be configured to execute computer-readable instructions stored in a memory to perform various functions (*e.g.,* functions or tasks supporting concurrent transmission of low latency and non-low latency uplink control channels).

Memory 725 may include random access memory (RAM) and read only memory (ROM). The memory 725 may store computer-readable, computer-executable software 730 including instructions that, when executed, cause the processor to perform various functions described herein. In some cases, the memory 725 may contain, among other things, a basic input/output system (BIOS) which may control basic hardware and/or software operation such as the interaction with peripheral components or devices.

Software 730 may include code to implement aspects of the present disclosure, including code to support concurrent transmission of low latency and non-low latency uplink control channels. Software 730 may be stored in a non-transitory computer-readable medium such as system memory or other memory. In some cases, the software 730 may not be directly executable by the processor but may cause a computer (*e.g.,* when compiled and executed) to perform functions described herein.

Transceiver 735 may communicate bi-directionally, via one or more antennas, wired, or wireless links as described above. For example, the transceiver 735 may represent a wireless transceiver and may communicate bi-directionally with another wireless transceiver. The transceiver 735 may also include a modem to modulate the packets and provide the modulated packets to the antennas for transmission, and to demodulate packets received from the antennas. In some cases, the wireless device may include a single antenna 740. However, in some cases the device may have more than one antenna 740, which may be capable of concurrently transmitting or receiving multiple wireless transmissions.

I/O controller 745 may manage input and output signals for device 705. I/O controller 745 may also manage peripherals not integrated into device 705. In some cases, I/O controller 745 may represent a physical connection or port to an external peripheral. In some cases, I/O controller 745 may utilize an operating system such as iOS^{®}, ANDROID^{®}, MS-DOS^{®}, MS-WINDOWS^{®}, OS/2^{®}, UNIX^{®}, LINUX^{®}, or another known operating system.

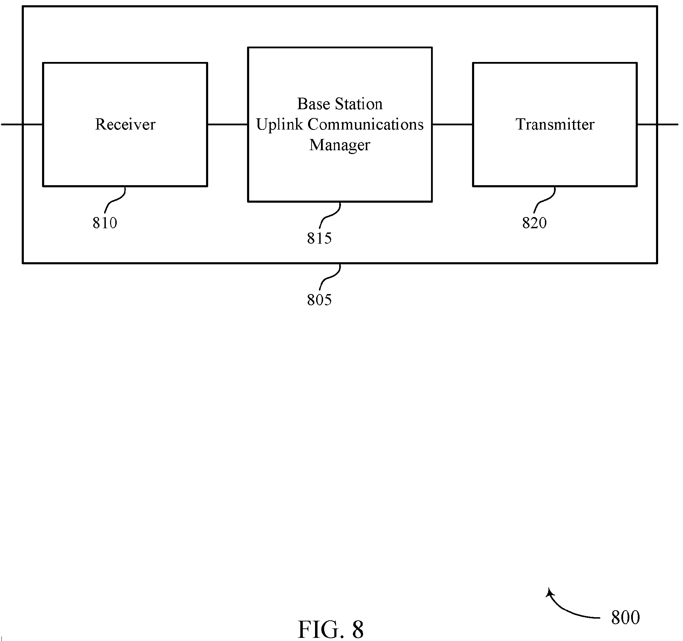

**FIG. 8** shows a block diagram 800 of a wireless device 805 that supports concurrent transmission of low latency and non-low latency uplink control channels in accordance with various aspects of the present disclosure. Wireless device 805 may be an example of aspects of a base station 105 as described with reference to FIG. 1. Wireless device 805 may include receiver 810, base station uplink communications manager 815, and transmitter 820. Wireless device 805 may also include a processor. Each of these components may be in communication with one another (*e.g.,* via one or more buses).

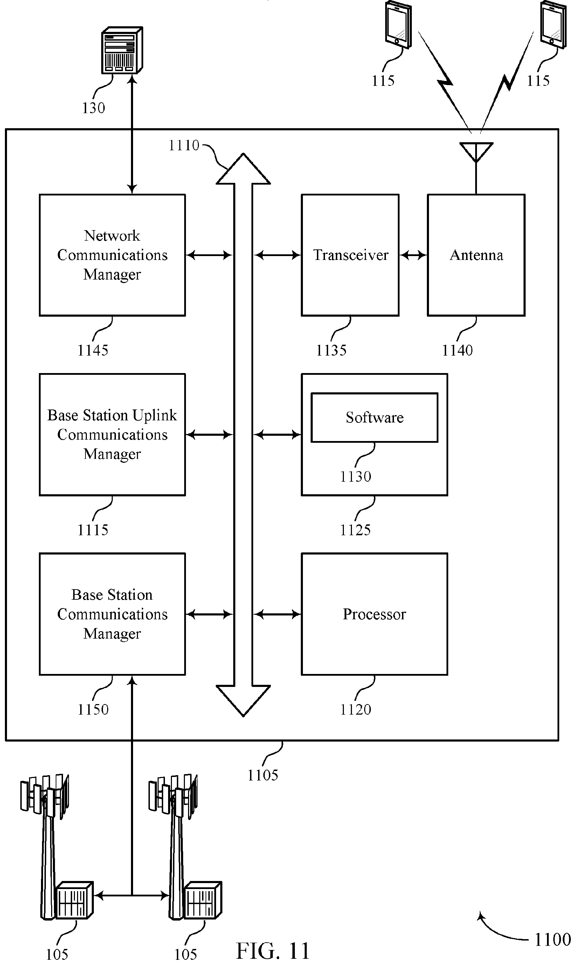

Receiver 810 may receive information such as packets, user data, or control information associated with various information channels (*e.g.,* control channels, data channels, and information related to concurrent transmission of low latency and non-low latency uplink control channels, *etc.).* Information may be passed on to other components of the device. The receiver 810 may be an example of aspects of the transceiver 1135 described with reference to FIG. 11.

Base station uplink communications manager 815 may be an example of aspects of the base station uplink communications manager 1115 described with reference to FIG. 11. Base station uplink communications manager 815 may schedule a UE 115 for a first uplink control channel message with a first transmission time during a TTI having the first TTI duration, schedule the UE 115 for a second uplink control channel message with a second transmission time during a second TTI having the second duration, where the first transmission time overlaps with the second transmission time, and, in combination with receiver 810, receive the first uplink control channel message or the second uplink control channel message, or both, from the UE 115 based on the first transmission time overlapping with the second transmission time.

Transmitter 820 may transmit signals generated by other components of the device. In some examples, the transmitter 820 may be collocated with a receiver 810 in a transceiver module. For example, the transmitter 820 may be an example of aspects of the transceiver 1135 described with reference to FIG. 11. The transmitter 820 may include a single antenna, or it may include a set of antennas.

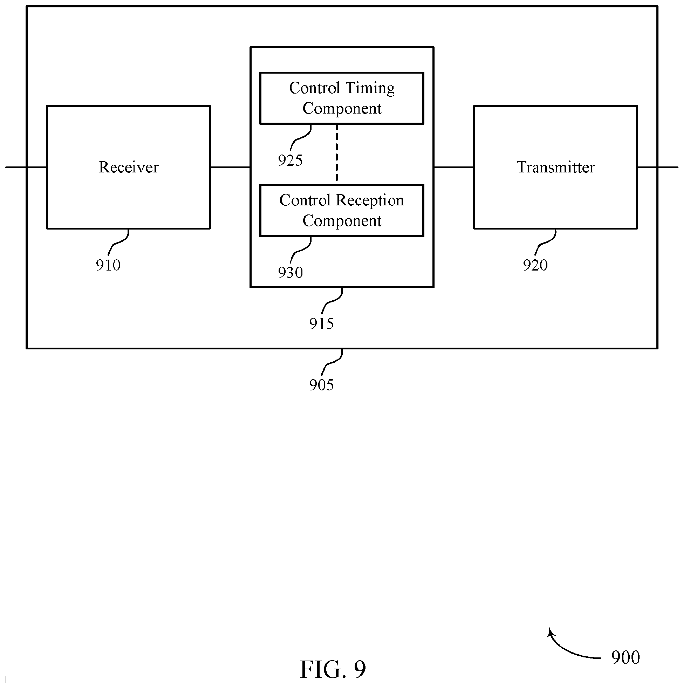

**FIG. 9** shows a block diagram 900 of a wireless device 905 that supports concurrent transmission of low latency and non-low latency uplink control channels in accordance with various aspects of the present disclosure. Wireless device 905 may be an example of aspects of a wireless device 805 or a base station 105 as described with reference to FIGs. 1 and 8. Wireless device 905 may include receiver 910, base station uplink communications manager 915, and transmitter 920. Wireless device 905 may also include a processor. Each of these components may be in communication with one another (*e.g.,* via one or more buses).

Receiver 910 may receive information such as packets, user data, or control information associated with various information channels (*e.g.,* control channels, data channels, and information related to concurrent transmission of low latency and non-low latency uplink control channels, *etc.).* Information may be passed on to other components of the device. The receiver 910 may be an example of aspects of the transceiver 1135 described with reference to FIG. 11.

Base station uplink communications manager 915 may be an example of aspects of the base station uplink communications manager 1115 described with reference to FIG. 11. Base station uplink communications manager 915 may also include control timing component 925 and control reception component 930. Control timing component 925 may schedule a UE 115 for a first uplink control channel message with a first transmission time during a TTI having the first TTI duration and schedule the UE 115 for a second uplink control channel message with a second transmission time during a second TTI having the second duration, where the first transmission time overlaps with the second transmission time.

Control reception component 930 may, in combination with receiver 910, receive the first uplink control channel message or the second uplink control channel message, or both, from the UE 115 based on the first transmission time overlapping with the second transmission time. Transmitter 920 may transmit signals generated by other components of the device. In some examples, the transmitter 920 may be collocated with a receiver 910 in a transceiver module. For example, the transmitter 920 may be an example of aspects of the transceiver 1135 described with reference to FIG. 11. The transmitter 920 may include a single antenna, or it may include a set of antennas.

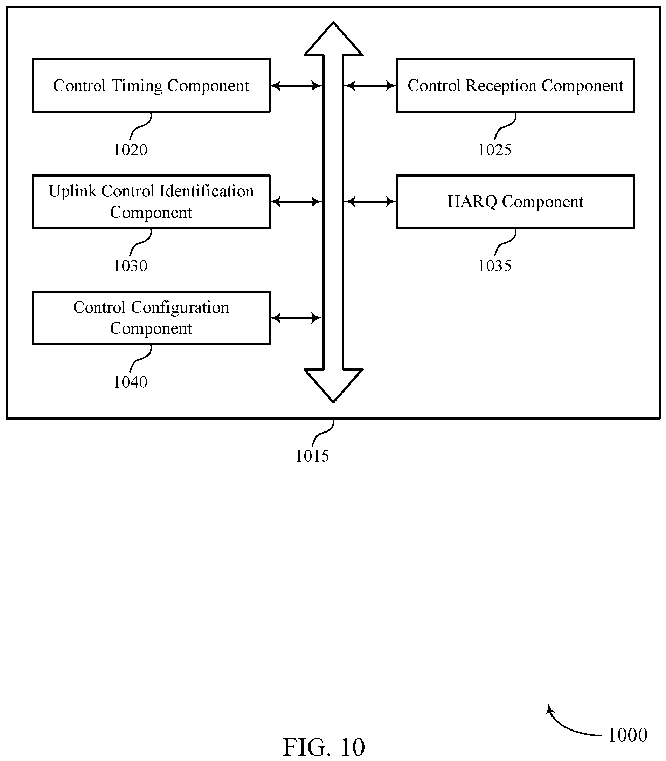

**FIG. 10** shows a block diagram 1000 of a base station uplink communications manager 1015 that supports concurrent transmission of low latency and non-low latency uplink control channels in accordance with various aspects of the present disclosure. The base station uplink communications manager 1015 may be an example of aspects of a base station uplink communications manager 1115 described with reference to FIGs. 8, 9, and 11. The base station uplink communications manager 1015 may include control timing component 1020, control reception component 1025, uplink control identification component 1030, HARQ component 1035, and control configuration component 1040. Each of these modules may communicate, directly or indirectly, with one another (*e.g.,* via one or more buses).

Control timing component 1020 may schedule a UE 115 for a first uplink control channel message with a first transmission time during a TTI having the first TTI duration and schedule the UE 115 for a second uplink control channel message with a second transmission time during a second TTI having the second duration, where the first transmission time overlaps with the second transmission time. Control reception component 1025 may receive the first uplink control channel message or the second uplink control channel message, or both, from the UE 115 based on the first transmission time overlapping with the second transmission time.

Uplink control identification component 1030 may determine that the UE 115 has refrained from transmitting the first uplink control channel message based on the first transmission time overlapping with the second transmission time and determine that the UE 115 has refrained from transmitting the second uplink control channel message based on the first transmission time overlapping with the second transmission time. HARQ component 1035 may receive HARQ acknowledgement feedback associated with the first TTI duration on an uplink shared channel (*e.g.,* sPUSCH). In some cases, HARQ component 1035 may receive HARQ acknowledgment feedback associated with the first TTI duration on an uplink control channel (*e.g.,* sPUCCH), such as when UCI transmissions on PUCCH are dropped.

Control configuration component 1040 may transmit, in combination with transmitter 820 or 920, a concurrent uplink transmission configuration to the UE 115, where the receiving is based on the concurrent uplink transmission configuration, transmit an updated concurrent uplink transmission configuration to the UE 115, transmit a power splitting parameter to the UE 115, where receiving the first uplink control channel message, the second uplink control channel message, or both is based on the power splitting parameter, and transmit a switching parameter to the UE 115, where receiving the first uplink control channel message or the second uplink control channel message, or both, is based on the switching parameter.

**FIG. 11** shows a diagram of a system 1100 including a device 1105 that supports concurrent transmission of low latency and non-low latency uplink control channels in accordance with various aspects of the present disclosure. Device 1105 may be an example of or include the components of base station 105 as described above, *e.g.,* with reference to FIG. 1. Device 1105 may include components for bi-directional voice and data communications including components for transmitting and receiving communications, including base station uplink communications manager 1115, processor 1120, memory 1125, software 1130, transceiver 1135, antenna 1140, network communications manager 1145, and base station communications manager 1150. These components may be in electronic communication via one or more busses (*e.g*., bus 1110). Device 1105 may communicate wirelessly with one or more UEs 115.

Processor 1120 may include an intelligent hardware device, (*e.g*., a general-purpose processor, a DSP, a CPU, a microcontroller, an ASIC, an FPGA, a programmable logic device, a discrete gate or transistor logic component, a discrete hardware component, or any combination thereof). In some cases, processor 1120 may be configured to operate a memory array using a memory controller. In other cases, a memory controller may be integrated into processor 1120. Processor 1120 may be configured to execute computer-readable instructions stored in a memory to perform various functions (*e.g*., functions or tasks supporting concurrent transmission of low latency and non-low latency uplink control channels).

Memory 1125 may include RAM and ROM. The memory 1125 may store computer-readable, computer-executable software 1130 including instructions that, when executed, cause the processor to perform various functions described herein. In some cases, the memory 1125 may contain, among other things, a BIOS which may control basic hardware and/or software operation such as the interaction with peripheral components or devices.

Software 1130 may include code to implement aspects of the present disclosure, including code to support concurrent transmission of low latency and non-low latency uplink control channels. Software 1130 may be stored in a non-transitory computer-readable medium such as system memory or other memory. In some cases, the software 1130 may not be directly executable by the processor but may cause a computer (*e.g.,* when compiled and executed) to perform functions described herein.

Transceiver 1135 may communicate bi-directionally, via one or more antennas, wired, or wireless links as described above. For example, the transceiver 1135 may represent a wireless transceiver and may communicate bi-directionally with another wireless transceiver. The transceiver 1135 may also include a modem to modulate the packets and provide the modulated packets to the antennas for transmission, and to demodulate packets received from the antennas. In some cases, the wireless device may include a single antenna 1140. However, in some cases the device may have more than one antenna 1140, which may be capable of concurrently transmitting or receiving multiple wireless transmissions.

Network communications manager 1145 may manage communications with the core network (*e.g.,* via one or more wired backhaul links). For example, the network communications manager 1145 may manage the transfer of data communications for client devices, such as one or more UEs 115. Base station communications manager 1150 may manage communications with other base station 105, and may include a controller or scheduler for controlling communications with UEs 115 in cooperation with other base stations 105. For example, the base station communications manager 1150 may coordinate scheduling for transmissions to UEs 115 for various interference mitigation techniques such as beamforming or joint transmission. In some examples, base station communications manager 1150 may provide an X2 interface within an Long Term Evolution (LTE)/LTE-A wireless communication network technology to provide communication between base stations 105.

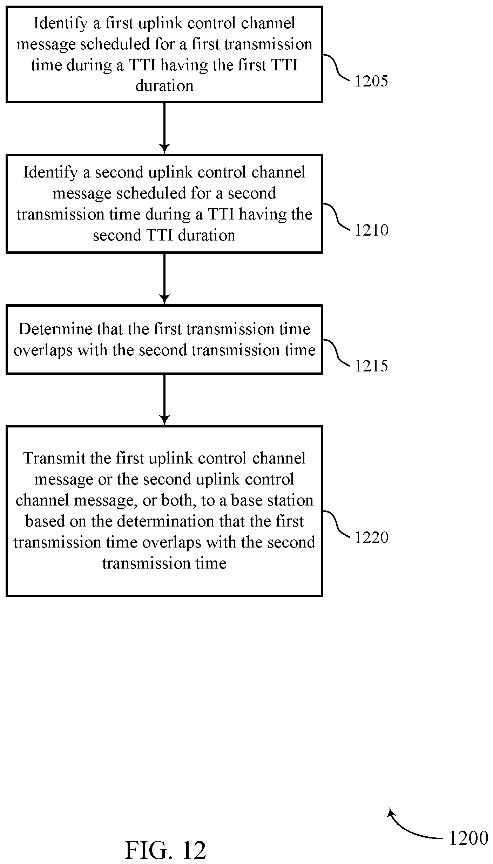

**FIG. 12** shows a flowchart illustrating a method 1200 for concurrent transmission of low latency and non-low latency uplink control channels in accordance with various aspects of the present disclosure. The operations of method 1200 may be implemented by a UE 115 or its components as described herein. For example, the operations of method 1200 may be performed by a UE uplink communications manager as described with reference to FIGs. 4 through 7. In some examples, a UE 115 may execute a set of codes to control the functional elements of the device to perform the functions described below. Additionally or alternatively, the UE 115 may perform aspects of the functions described below using special-purpose hardware.

At block 1205 the UE 115 may identify a first uplink control channel message scheduled for a first transmission time during a TTI having the first TTI duration. The operations of block 1205 may be performed according to the methods described with reference to FIGs. 1 through 3. In some examples, aspects of the operations of block 1205 may be performed by a control timing component as described with reference to FIGs. 4 through 7.

At block 1210 the UE 115 may identify a second uplink control channel message scheduled for a second transmission time during a TTI having the second TTI duration. The operations of block 1210 may be performed according to the methods described with reference to FIGs. 1 through 3. In some examples, aspects of the operations of block 1210 may be performed by a control timing component as described with reference to FIGs. 4 through 7.

At block 1215 the UE 115 may determine that the first transmission time overlaps with the second transmission time. The operations of block 1215 may be performed according to the methods described with reference to FIGs. 1 through 3. In some examples, aspects of the operations of block 1215 may be performed by a timing coordination component as described with reference to FIGs. 4 through 7.

At block 1220 the UE 115 may transmit the first uplink control channel message or the second uplink control channel message (the latter in the invention), or both, to a base station 105 based on the determination that the first transmission time overlaps with the second transmission time. For example, the UE 115 may transmit the second uplink control channel message and refrain from transmitting the first uplink control channel message based on the determination that the first transmission time overlaps with the second transmission time. The second uplink control message may include HARQ acknowledgement feedback associated with the first TTI duration on an uplink shared channel and does may include at least a portion of a P-CSI report associated with the first TTI duration. The portion of the P-CSI report to include in the second uplink control channel message may be determined based on the second TTI duration or a number of resource blocks used for transmission of the second uplink control channel message. In another example, the UE 115 may transmit the first uplink control channel message and refrain from transmitting the second uplink control channel message based on the determination that the first transmission time overlaps with the second transmission time. The operations of block 1220 may be performed according to the methods described with reference to FIGs. 1 through 3. In some examples, aspects of the operations of block 1220 may be performed by an uplink control component as described with reference to FIGs. 4 through 7.

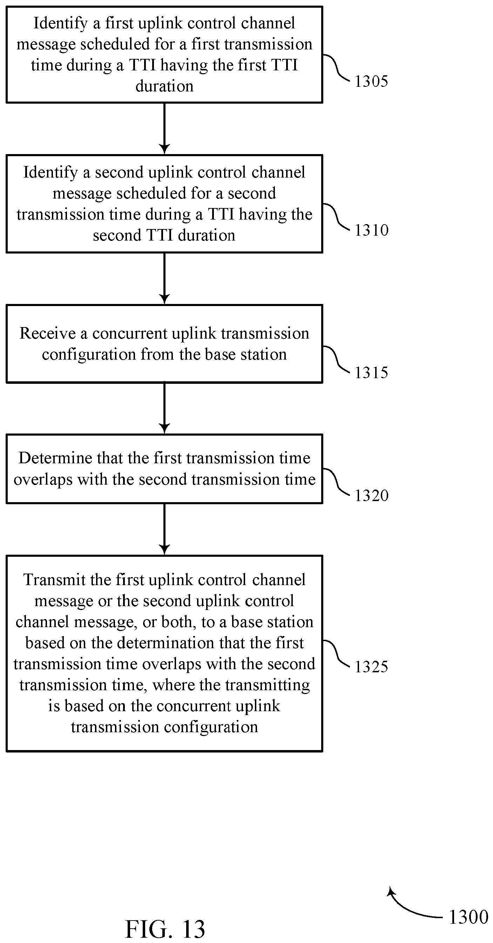

**FIG. 13** shows a flowchart illustrating a method 1300 for concurrent transmission of low latency and non-low latency uplink control channels in accordance with various aspects of the present disclosure. The operations of method 1300 may be implemented by a UE 115 or its components as described herein. For example, the operations of method 1300 may be performed by a UE uplink communications manager as described with reference to FIGs. 4 through 7. In some examples, a UE 115 may execute a set of codes to control the functional elements of the device to perform the functions described below. Additionally or alternatively, the UE 115 may perform aspects of the functions described below using special-purpose hardware.

At block 1305 the UE 115 may identify a first uplink control channel message scheduled for a first transmission time during a TTI having the first TTI duration. The operations of block 1305 may be performed according to the methods described with reference to FIGs. 1 through 3. In some examples, aspects of the operations of block 1305 may be performed by a control timing component as described with reference to FIGs. 4 through 7.

At block 1310 the UE 115 may identify a second uplink control channel message scheduled for a second transmission time during a TTI having the second TTI duration. The operations of block 1310 may be performed according to the methods described with reference to FIGs. 1 through 3. In some examples, aspects of the operations of block 1310 may be performed by a control timing component as described with reference to FIGs. 4 through 7.

At block 1315 the UE 115 may receive a concurrent uplink transmission configuration from the base station.. The operations of block 1315 may be performed according to the methods described with reference to FIGs. 1 through 3. In some examples, aspects of the operations of block 1315 may be performed by an uplink control configuration component as described with reference to FIGs. 4 through 7.

At block 1320 the UE 115 may determine that the first transmission time overlaps with the second transmission time. The operations of block 1320 may be performed according to the methods described with reference to FIGs. 1 through 3. In some examples, aspects of the operations of block 1320 may be performed by a timing coordination component as described with reference to FIGs. 4 through 7.

At block 1325 the UE 115 may transmit the first uplink control channel message or the second uplink control channel message, or both, to a base station 105 based on the determination that the first transmission time overlaps with the second transmission time. In some cases, the transmitting may be based at least in part on the concurrent uplink transmission configuration. The operations of block 1325 may be performed according to the methods described with reference to FIGs. 1 through 3. In some examples, aspects of the operations of block 1325 may be performed by an uplink control component as described with reference to FIGs. 4 through 7.

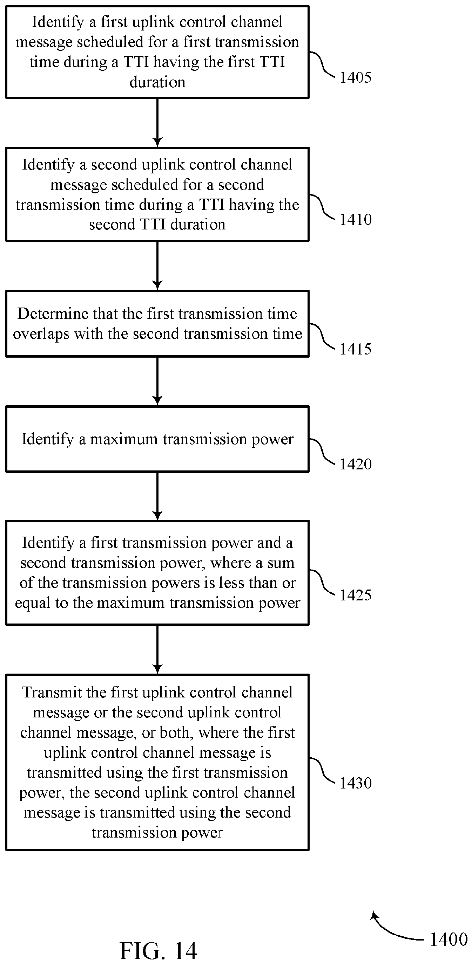

**FIG. 14** shows a flowchart illustrating a method 1400 for concurrent transmission of low latency and non-low latency uplink control channels in accordance with various aspects of the present disclosure. The operations of method 1400 may be implemented by a UE 115 or its components as described herein. For example, the operations of method 1400 may be performed by a UE uplink communications manager as described with reference to FIGs. 4 through 7. In some examples, a UE 115 may execute a set of codes to control the functional elements of the device to perform the functions described below. Additionally or alternatively, the UE 115 may perform aspects of the functions described below using special-purpose hardware.

At block 1405 the UE 115 may identify a first uplink control channel message scheduled for a first transmission time during a TTI having the first TTI duration. The operations of block 1405 may be performed according to the methods described with reference to FIGs. 1 through 3. In some examples, aspects of the operations of block 1405 may be performed by a control timing component as described with reference to FIGs. 4 through 7.

At block 1410 the UE 115 may identify a second uplink control channel message scheduled for a second transmission time during a TTI having the second TTI duration. The operations of block 1410 may be performed according to the methods described with reference to FIGs. 1 through 3. In some examples, aspects of the operations of block 1410 may be performed by a control timing component as described with reference to FIGs. 4 through 7.

At block 1415 the UE 115 may determine that the first transmission time overlaps with the second transmission time. The operations of block 1415 may be performed according to the methods described with reference to FIGs. 1 through 3. In some examples, aspects of the operations of block 1415 may be performed by a timing coordination component as described with reference to FIGs. 4 through 7.

At block 1420 the UE 115 may identify a maximum transmission power. The operations of block 1420 may be performed according to the methods described with reference to FIGs. 1 through 3. In some examples, aspects of the operations of block 1420 may be performed by a transmission power component as described with reference to FIGs. 4 through 7.

At block 1425 the UE 115 may identify a first transmission power and a second transmission power, where a sum of the first transmission power and the second transmission power is less than or equal to the maximum transmission power. The operations of block 1425 may be performed according to the methods described with reference to FIGs. 1 through 3. In some examples, aspects of the operations of block 1425 may be performed by a transmission power component as described with reference to FIGs. 4 through 7.

At block 1430 the UE 115 may transmit the first uplink control channel message or the second uplink control channel message, or both, to a base station 105 based on the determination that the first transmission time overlaps with the second transmission time, where the first uplink control channel message is transmitted using the first transmission power, and the second uplink control channel message is transmitted using the second transmission power. The operations of block 1430 may be performed according to the methods described with reference to FIGs. 1 through 3. In some examples, aspects of the operations of block 1430 may be performed by an uplink control component as described with reference to FIGs. 4 through 7.

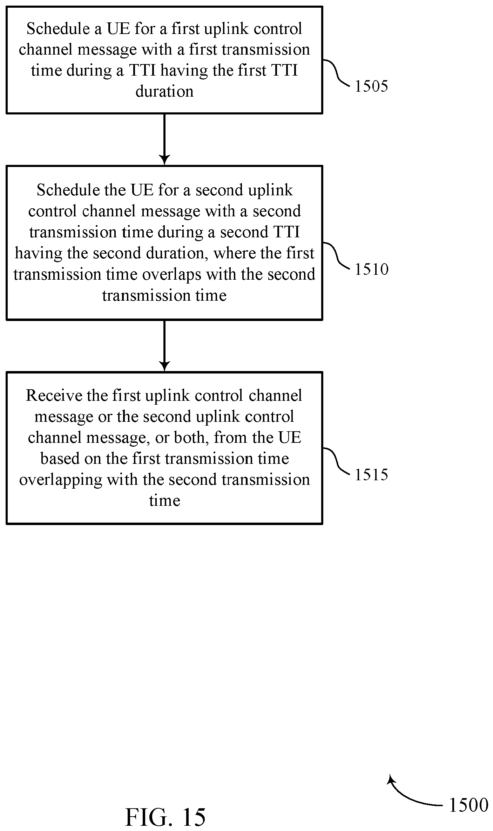

**FIG. 15** shows a flowchart illustrating a method 1500 for concurrent transmission of low latency and non-low latency uplink control channels in accordance with various aspects of the present disclosure. The operations of method 1500 may be implemented by a base station 105 or its components as described herein. For example, the operations of method 1500 may be performed by a base station uplink communications manager as described with reference to FIGs. 8 through 11. In some examples, a base station 105 may execute a set of codes to control the functional elements of the device to perform the functions described below. Additionally or alternatively, the base station 105 may perform aspects of the functions described below using special-purpose hardware.

At block 1505 the base station 105 may schedule a UE 115 for a first uplink control channel message with a first transmission time during a TTI having the first TTI duration. The operations of block 1505 may be performed according to the methods described with reference to FIGs. 1 through 3. In some examples, aspects of the operations of block 1505 may be performed by a control timing component as described with reference to FIGs. 8 through 11.

At block 1510 the base station 105 may schedule the UE 115 for a second uplink control channel message with a second transmission time during a second TTI having the second duration, wherein the first transmission time overlaps with the second transmission time. The operations of block 1510 may be performed according to the methods described with reference to FIGs. 1 through 3. In some examples, aspects of the operations of block 1510 may be performed by a control timing component as described with reference to FIGs. 8 through 11.

At block 1515 the base station 105 may receive the first uplink control channel message or the second uplink control channel message, or both, from the UE 115 based on the first transmission time overlapping with the second transmission time. In some examples, the base station 105 may determine that the UE 115 has refrained from transmitting the first uplink control channel message based on the first transmission time overlapping with the second transmission time. In some examples, the base station 105 may receive HARQ acknowledgement feedback associated with the first TTI duration on an uplink shared channel. In some examples, the base station 105 may determine that the UE 115 has refrained from transmitting the second uplink control channel message based on the first transmission time overlapping with the second transmission time. The operations of block 1515 may be performed according to the methods described with reference to FIGs. 1 through 3. In some examples, aspects of the operations of block 1515 may be performed by a control reception component as described with reference to FIGs. 8 through 11.

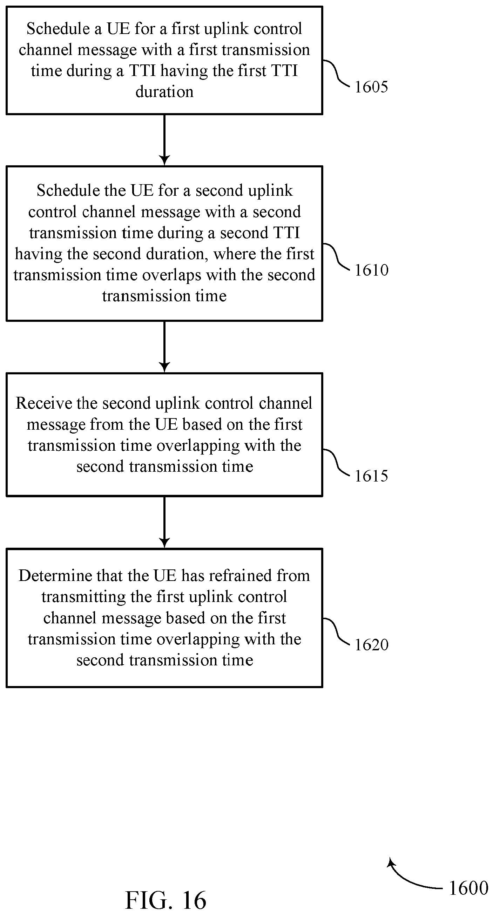

**FIG. 16** shows a flowchart illustrating a method 1600 for concurrent transmission of low latency and non-low latency uplink control channels in accordance with various aspects of the present disclosure. The operations of method 1600 may be implemented by a base station 105 or its components as described herein. For example, the operations of method 1600 may be performed by a base station uplink communications manager as described with reference to FIGs. 8 through 11. In some examples, a base station 105 may execute a set of codes to control the functional elements of the device to perform the functions described below. Additionally or alternatively, the base station 105 may perform aspects of the functions described below using special-purpose hardware.

At block 1605 the base station 105 may schedule a UE 115 for a first uplink control channel message with a first transmission time during a TTI having the first TTI duration. The operations of block 1605 may be performed according to the methods described with reference to FIGs. 1 through 3. In some examples, aspects of the operations of block 1605 may be performed by a control timing component as described with reference to FIGs. 8 through 11.

At block 1610 the base station 105 may schedule the UE 115 for a second uplink control channel message with a second transmission time during a second TTI having the second duration, wherein the first transmission time overlaps with the second transmission time. The operations of block 1610 may be performed according to the methods described with reference to FIGs. 1 through 3. In some examples, aspects of the operations of block 1610 may be performed by a control timing component as described with reference to FIGs. 8 through 11.

At block 1615 the base station 105 may receive the second uplink control channel message from the UE 115 based on the first transmission time overlapping with the second transmission time. The operations of block 1615 may be performed according to the methods described with reference to FIGs. 1 through 3. In some examples, aspects of the operations of block 1615 may be performed by a control reception component as described with reference to FIGs. 8 through 11.

At block 1620 the base station 105 may determine that the UE 115 has refrained from transmitting the first uplink control channel message based on the first transmission time overlapping with the second transmission time. The operations of block 1620 may be performed according to the methods described with reference to FIGs. 1 through 3. In some examples, aspects of the operations of block 1620 may be performed by an uplink control identification component as described with reference to FIGs. 8 through 11.

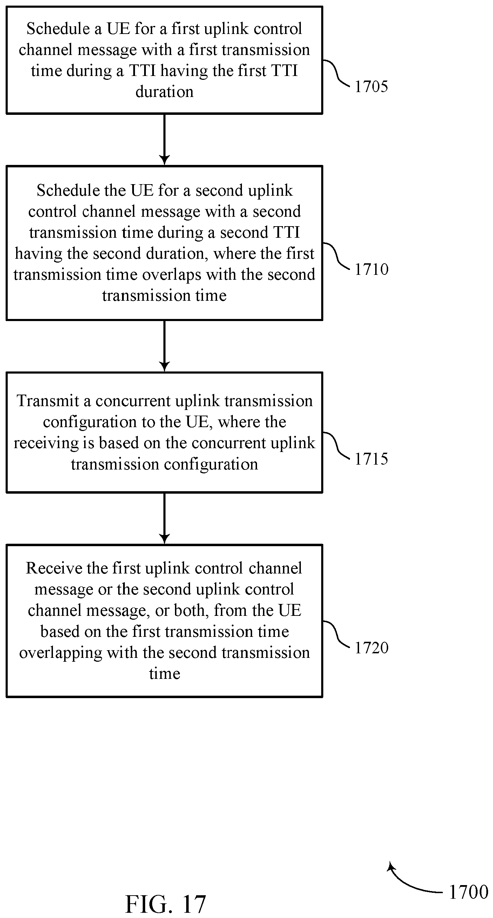

**FIG. 17** shows a flowchart illustrating a method 1700 for concurrent transmission of low latency and non-low latency uplink control channels in accordance with various aspects of the present disclosure. The operations of method 1700 may be implemented by a base station 105 or its components as described herein. For example, the operations of method 1700 may be performed by a base station uplink communications manager as described with reference to FIGs. 8 through 11. In some examples, a base station 105 may execute a set of codes to control the functional elements of the device to perform the functions described below. Additionally or alternatively, the base station 105 may perform aspects of the functions described below using special-purpose hardware.

At block 1705 the base station 105 may schedule a UE 115 for a first uplink control channel message with a first transmission time during a TTI having the first TTI duration. The operations of block 1705 may be performed according to the methods described with reference to FIGs. 1 through 3. In some examples, aspects of the operations of block 1705 may be performed by a control timing component as described with reference to FIGs. 8 through 11.

At block 1710 the base station 105 may schedule the UE 115 for a second uplink control channel message with a second transmission time during a second TTI having the second duration, wherein the first transmission time overlaps with the second transmission time. The operations of block 1710 may be performed according to the methods described with reference to FIGs. 1 through 3. In some examples, aspects of the operations of block 1710 may be performed by a control timing component as described with reference to FIGs. 8 through 11.

At block 1715 the base station 105 may transmit a concurrent uplink transmission configuration to the UE 115, wherein the receiving is based on the concurrent uplink transmission configuration. The operations of block 1715 may be performed according to the methods described with reference to FIGs. 1 through 3. In some examples, aspects of the operations of block 1715 may be performed by a control configuration component as described with reference to FIGs. 8 through 11.

At block 1720 the base station 105 may receive the first uplink control channel message or the second uplink control channel message, or both, from the UE 115 based on the first transmission time overlapping with the second transmission time. The operations of block 1720 may be performed according to the methods described with reference to FIGs. 1 through 3. In some examples, aspects of the operations of block 1720 may be performed by a control reception component as described with reference to FIGs. 8 through 11.

In some examples, aspects from two or more of the methods 1200, 1300, 1400, 1500, 1600, or 1700 described with reference to FIGs. 12, 13, 14, 15, 16, or 17 may be combined. It should be noted that the methods 1200, 1300, 1400, 1500, 1600, or 1700 are just example implementations, and that the operations of the methods 1200, 1300, 1400, 1500, 1600, or 1700 may be rearranged or otherwise modified such that other implementations are possible.

Techniques described herein may be used for various wireless communications systems such as code division multiple access (CDMA), time division multiple access (TDMA), frequency division multiple access (FDMA), orthogonal frequency division multiple access (OFDMA), single carrier frequency division multiple access (SC-FDMA), and other systems. The terms "system" and "network" are often used interchangeably. A code division multiple access (CDMA) system may implement a radio technology such as CDMA2000, Universal Terrestrial Radio Access (UTRA), *etc.* CDMA2000 covers IS-2000, IS-95, and IS-856 standards. IS-2000 Releases may be commonly referred to as CDMA2000 1X, 1X, *etc.* IS-856 (TIA-856) is commonly referred to as CDMA2000 1xEV-DO, High Rate Packet Data (HRPD), *etc.* UTRA includes Wideband CDMA (WCDMA) and other variants of CDMA. A time division multiple access (TDMA) system may implement a radio technology such as Global System for Mobile Communications (GSM).

An orthogonal frequency division multiple access (OFDMA) system may implement a radio technology such as Ultra Mobile Broadband (UMB), Evolved UTRA (E-UTRA), Institute of Electrical and Electronics Engineers (IEEE) 802.11 (Wi-Fi), IEEE 802.16 (WiMAX), IEEE 802.20, Flash-OFDM, *etc.* UTRA and E-UTRA are part of Universal Mobile Telecommunications system (UMTS). 3GPP Long Term Evolution (LTE) and LTE-Advanced (LTE-A) are releases of Universal Mobile Telecommunications System (UMTS) that use E-UTRA. UTRA, E-UTRA, UMTS, LTE, LTE-A, and Global System for Mobile communications (GSM) are described in documents from the organization named "3rd Generation Partnership Project" (3GPP). CDMA2000 and UMB are described in documents from an organization named "3rd Generation Partnership Project 2" (3GPP2). The techniques described herein may be used for the systems and radio technologies mentioned above as well as other systems and radio technologies. While aspects an LTE system may be described for purposes of example, and LTE terminology may be used in much of the description, the techniques described herein are applicable beyond LTE applications.

In LTE/LTE-A networks, including such networks described herein, the term evolved node B (eNB) may be generally used to describe the base stations. The wireless communications system or systems described herein may include a heterogeneous LTE/LTE-A network in which different types of evolved node B (eNBs) provide coverage for various geographical regions. For example, each eNB or base station may provide communication coverage for a macro cell, a small cell, or other types of cell. The term "cell" may be used to describe a base station, a carrier or component carrier associated with a base station, or a coverage area *(e.g.,* sector, *etc.)* of a carrier or base station, depending on context.

Base stations may include or may be referred to by those skilled in the art as a base transceiver station, a radio base station, an access point, a radio transceiver, a NodeB, eNodeB (eNB), Home NodeB, a Home eNodeB, or some other suitable terminology. The geographic coverage area for a base station may be divided into sectors making up only a portion of the coverage area. The wireless communications system or systems described herein may include base stations of different types (*e.g.,* macro or small cell base stations). The UEs described herein may be able to communicate with various types of base stations and network equipment including macro eNBs, small cell eNBs, relay base stations, and the like. There may be overlapping geographic coverage areas for different technologies.

A macro cell generally covers a relatively large geographic area (*e.g.,* several kilometers in radius) and may allow unrestricted access by UEs with service subscriptions with the network provider. A small cell is a lower-powered base station, as compared with a macro cell, that may operate in the same or different (*e.g.,* licensed, unlicensed, *etc.)* frequency bands as macro cells. Small cells may include pico cells, femto cells, and micro cells according to various examples. A pico cell, for example, may cover a small geographic area and may allow unrestricted access by UEs with service subscriptions with the network provider. A femto cell may also cover a small geographic area (*e.g.,* a home) and may provide restricted access by UEs having an association with the femto cell (*e.g.,* UEs in a closed subscriber group (CSG), UEs for users in the home, and the like). An eNB for a macro cell may be referred to as a macro eNB. An eNB for a small cell may be referred to as a small cell eNB, a pico eNB, a femto eNB, or a home eNB. An eNB may support one or multiple *(e.g.,* two, three, four, and the like) cells (*e.g.,* component carriers). A UE may be able to communicate with various types of base stations and network equipment including macro eNBs, small cell eNBs, relay base stations, and the like.

The wireless communications system or systems described herein may support synchronous or asynchronous operation. For synchronous operation, the base stations may have similar frame timing, and transmissions from different base stations may be approximately aligned in time. For asynchronous operation, the base stations may have different frame timing, and transmissions from different base stations may not be aligned in time. The techniques described herein may be used for either synchronous or asynchronous operations.

The downlink transmissions described herein may also be called forward link transmissions while the uplink transmissions may also be called reverse link transmissions. Each communication link described herein-including, for example, wireless communications system 100 and 200 of FIGs. 1 and 2-may include one or more carriers, where each carrier may be a signal made up of multiple sub-carriers (*e.g.,* waveform signals of different frequencies).

The description set forth herein, in connection with the appended drawings, describes example configurations and does not represent all the examples that may be implemented or that are within the scope of the claims. The term "exemplary" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and devices are shown in block diagram form in order to avoid obscuring the concepts of the described examples.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label.

Information and signals described herein may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a DSP, an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices *(e.g.,* a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described above can be implemented using software executed by a processor, hardware, firmware, hardwiring, or combinations of any of these. Features implementing functions may be physically located at various positions, including being distributed such that portions of functions are implemented at different physical locations. As used herein, including in the claims, the term "and/or," when used in a list of two or more items, means that any one of the listed items can be employed by itself, or any combination of two or more of the listed items can be employed. For example, if a composition is described as containing components A, B, and/or C, the composition can contain A alone; B alone; C alone; A and B in combination; A and C in combination; B and C in combination; or A, B, and C in combination. Also, as used herein, including in the claims, "or" as used in a list of items (for example, a list of items prefaced by a phrase such as "at least one of" or "one or more of") indicates an inclusive list such that, for example, a phrase referring to "at least one of" a list of items refers to any combination of those items, including single members. As an example, "at least one of A, B, or C" is intended to cover A, B, C, A-B, A-C, B-C, and A-B-C., as well as any combination with multiples of the same element *(e.g.,* A-A A-A-A, A-A-B, A-A-C, A-B-B, A-C-C, B-B, B-B-B, B-B-C, C-C, and C-C-C or any other ordering of A, B, and C).

As used herein, the phrase "based on" shall not be construed as a reference to a closed set of conditions. For example, an exemplary feature that is described as "based on condition A" may be based on both a condition A and a condition B without departing from the scope of the present disclosure. In other words, as used herein, the phrase "based on" shall be construed in the same manner as the phrase "based at least in part on."

Computer-readable media includes both non-transitory computer storage media and communication media including any medium that facilitates transfer of a computer program from one place to another. A non-transitory storage medium may be any available medium that can be accessed by a general purpose or special purpose computer. By way of example, and not limitation, non-transitory computer-readable media can comprise RAM, ROM, electrically erasable programmable read only memory (EEPROM), compact disk (CD) ROM or other optical disk storage, magnetic disk storage or other magnetic storage devices, or any other non-transitory medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

## Claims

1. A method for wireless communication in a system that supports a first transmission time interval, TTI, duration and a second TTI duration that is less than the first TTI duration, the method comprising:
identifying (1205), at a user equipment, UE (115), a first uplink control channel message scheduled for a first transmission time during a TTI having the first TTI duration;
identifying (1210), at the UE (115), a second uplink control channel message scheduled for a second transmission time during a TTI having the second TTI duration;
determining (1215), at the UE (115), that the first transmission time overlaps with the second transmission time; and
transmitting (1220), from the UE (115) to a base station (105), the second uplink control channel message based at least in part on the determination that the first transmission time overlaps with the second transmission time, wherein the second uplink control channel message comprises a portion of a periodic channel state information, P-CSI, report associated with the first TTI duration and refraining from transmitting the first uplink control channel message based at least in part on the determination that the first transmission time overlaps with the second transmission time.

2. The method of claim 1, further comprising:
determining the portion of the P-CSI report to include in the second uplink control channel message based at least in part on the second TTI duration or a number of resource blocks used for transmission of the second uplink control channel message, or both.

3. The method of claim 1, further comprising:
receiving a concurrent uplink transmission configuration from the base station (105), wherein the transmitting is based at least in part on the concurrent uplink transmission configuration.

4. The method of claim 1, further comprising:
identifying a maximum transmission power; and
identifying a first transmission power and a second transmission power,
wherein the first uplink control channel message is transmitted using the first transmission power, the second uplink control channel message is transmitted using the second transmission power, and a sum of the first transmission power and the second transmission power is less than or equal to the maximum transmission power.

5. The method of claim 4, further comprising:
receiving a power splitting parameter from the base station (105), wherein the first transmission power and the second transmission power are identified based at least in part on the power splitting parameter.

6. A method for wireless communication in a system that supports a first transmission time interval, TTI, duration and a second TTI duration that is less than the first TTI duration, the method comprising:
scheduling (1505), by a base station (105), a user equipment, UE (115), for a first uplink control channel message with a first transmission time during a TTI having the first TTI duration;
scheduling (1510), by the base station (105), the UE (115) for a second uplink control channel message with a second transmission time during a second TTI having the second TTI duration, wherein the first transmission time overlaps with the second transmission time; and
receiving, at the base station (105) from the UE (115), the second uplink control channel message based at least in part on the first transmission time overlapping with the second transmission time, wherein the second uplink control channel message comprises a portion of a periodic channel state information, P-CSI, report associated with the first TTI duration and determining that the UE (115) has refrained from transmitting the first uplink control channel message based at least in part on the first transmission time overlapping with the second transmission time.

7. The method of claim 6, further comprising:
transmitting a concurrent uplink transmission configuration to the UE (115), wherein the receiving is based at least in part on the concurrent uplink transmission configuration.

8. The method of claim 7, further comprising:
transmitting an updated concurrent uplink transmission configuration to the UE (115).

9. The method of claim 6, further comprising:
transmitting a switching parameter to the UE (115), wherein receiving the first uplink control channel message or the second uplink control channel message, or both, is based at least in part on the switching parameter.

10. A user equipment, UE (115), for wireless communication in a system that supports a first transmission time interval, TTI, duration and a second TTI duration that is less than the first TTI duration, the UE (115) comprising:
means for identifying a first uplink control channel message scheduled for a first transmission time during a TTI having the first TTI duration;
means for identifying a second uplink control channel message scheduled for a second transmission time during a TTI having the second TTI duration;
means for determining that the first transmission time overlaps with the second transmission time; and
means for transmitting, to a base station (105), the second uplink control channel message based at least in part on the determination that the first transmission time overlaps with the second transmission time, wherein the second uplink control channel message comprises a portion of a periodic channel state information, P-CSI, report associated with the first TTI duration and refraining from transmitting the first uplink control channel message based at least in part on the determination that the first transmission time overlaps with the second transmission time.

11. A base station (105) for wireless communication in a system that supports a first transmission time interval, TTI, duration and a second TTI duration that is less than the first TTI duration, the base station (105) comprising:
means for scheduling a user equipment, UE (115), for a first uplink control channel message with a first transmission time during a TTI having the first TTI duration;
means for scheduling the UE (115) for a second uplink control channel message with a second transmission time during a second TTI having the second TTI duration, wherein the first transmission time overlaps with the second transmission time;
means for receiving, from the UE (115), the second uplink control channel message based at least in part on the first transmission time overlapping with the second transmission time, wherein the second uplink control channel message comprises a portion of a periodic channel state information, P-CSI, report associated with the first TTI duration; and
means for determining that the UE (115) has refrained from transmitting the first uplink control channel message based at least in part on the first transmission time overlapping with the second transmission time.

## Patentansprüche

1. Ein Verfahren zur drahtlosen Kommunikation in einem System, das eine erste Übertragungszeitintervall-, TTI-, Dauer und eine zweite TTI-Dauer, die kürzer als die erste TTI-Dauer ist, unterstützt, das Verfahren aufweisend:
Identifizieren (1205), an einem Benutzergerät, UE (115), einer ersten Aufwärtsverbindungs-Steuerkanalnachricht, die für eine erste Übertragungszeit während eines TTI mit der ersten TTI-Dauer geplant ist;
Identifizieren (1210), an dem UE (115), einer zweiten Aufwärtsverbindungs-Steuerkanalnachricht, die für eine zweite Übertragungszeit während eines TTI mit der zweiten TTI-Dauer geplant ist;
Bestimmen (1215), an dem UE (115), dass die erste Übertragungszeit mit der zweiten Übertragungszeit überlappt; und
Übertragen (1220), von dem UE (115) an eine Basisstation (105), der zweiten Aufwärtsverbindungs-Steuerkanalnachricht basierend zumindest teilweise auf der Bestimmung, dass die erste Übertragungszeit mit der zweiten Übertragungszeit überlappt, wobei die zweite Aufwärtsverbindungs-Steuerkanalnachricht einen Teil eines periodischen Kanalzustandsinformations, P-CSI-, Berichts aufweist, der der ersten TTI-Dauer zugeordnet ist, und Unterlassen von Übertragen der ersten Aufwärtsverbindungs-Steuerkanalnachricht basierend zumindest teilweise auf der Bestimmung, dass die erste Übertragungszeit mit der zweiten Übertragungszeit überlappt.

2. Das Verfahren nach Anspruch 1, weiter aufweisend:
Bestimmen des Teils des P-CSI-Berichts, der in der zweiten Aufwärtsverbindungs-Steuerkanalnachricht enthalten sein soll, basierend zumindest teilweise auf der zweiten TTI-Dauer oder einer Anzahl von Ressourcenblöcken, die für Übertragung der zweiten Aufwärtsverbindungs-Steuerkanalnachricht verwendet werden, oder beidem.

3. Das Verfahren nach Anspruch 1, weiter aufweisend:
Empfangen einer gleichzeitigen Aufwärtsverbindungs-Übertragungskonfiguration von der Basisstation (105), wobei das Übertragen zumindest teilweise auf der gleichzeitigen Aufwärtsverbindungs-Übertragungskonfiguration basiert.

4. Das Verfahren nach Anspruch 1, weiter aufweisend:
Identifizieren einer maximalen Übertragungsleistung; und
Identifizieren einer ersten Übertragungsleistung und einer zweiten Übertragungsleistung, wobei die erste Aufwärtsverbindungs-Steuerkanalnachricht unter Verwendung der ersten Übertragungsleistung übertragen wird, die zweite Aufwärtsverbindungs-Steuerkanalnachricht unter Verwendung der zweiten Übertragungsleistung übertragen wird, und eine Summe der ersten Übertragungsleistung und der zweiten Übertragungsleistung kleiner oder gleich der maximalen Übertragungsleistung ist.

5. Das Verfahren nach Anspruch 4, weiter aufweisend:
Empfangen eines Leistungsteilungsparameters von der Basisstation (105), wobei die erste Übertragungsleistung und die zweite Übertragungsleistung zumindest teilweise basierend auf dem Leistungsteilungsparameter identifiziert werden.

6. Ein Verfahren zur drahtlosen Kommunikation in einem System, das eine erste Übertragungszeitintervall-, TTI-, Dauer und eine zweite TTI-Dauer, die kürzer als die erste TTI-Dauer ist, unterstützt, das Verfahren aufweisend:
Planen (1505), durch eine Basisstation (105), eines Benutzergeräts, UE (115), für eine erste Aufwärtsverbindungs-Steuerkanalnachricht mit einer ersten Übertragungszeit während eines TTI mit der ersten TTI-Dauer;
Planen (1510), durch die Basisstation (105), des UE (115) für eine zweite Aufwärtsverbindungs-Steuerkanalnachricht mit einer zweiten Übertragungszeit während eines zweiten TTI mit der zweiten TTI-Dauer, wobei die erste Übertragungszeit mit der zweiten Übertragungszeit überlappt; und
Empfangen, an der Basisstation (105) von dem UE (115), der zweiten Aufwärtsverbindungs-Steuerkanalnachricht basierend zumindest teilweise auf der ersten Übertragungszeit, die mit der zweiten Übertragungszeit überlappt, wobei die zweite Aufwärtsverbindungs-Steuerkanalnachricht einen Teil eines periodischen Kanalzustandsinformations-, P-CSI-, Berichts aufweist, der der ersten TTI-Dauer zugeordnet ist, und Bestimmen, dass das UE (115) unterlassen hat, die erste Aufwärtsverbindungs-Steuerkanalnachricht zu übertragen basierend zumindest teilweise auf der ersten Übertragungszeit, die mit der zweiten Übertragungszeit überlappt.

7. Das Verfahren nach Anspruch 6, weiter aufweisend:
Übertragen einer gleichzeitigen AufwärtsverbindungsÜbertragungskonfiguration an das UE (115), wobei das Empfangen zumindest teilweise auf der gleichzeitigen AufwärtsverbindungsÜbertragungskonfiguration basiert.

8. Das Verfahren nach Anspruch 7, weiter aufweisend:
Übertragen einer aktualisierten gleichzeitigen AufwärtsverbindungsÜbertragungskonfiguration an das UE (115).

9. Das Verfahren nach Anspruch 6, weiter aufweisend:
Übertragen eines Schaltparameters an das UE (115), wobei Empfangen der ersten Aufwärtsverbindungs-Steuerkanalnachricht oder der zweiten Aufwärtsverbindungs-Steuerkanalnachricht, oder beides, zumindest teilweise auf dem Schaltparameter basiert.

10. Ein Benutzergerät, UE (115), zur drahtlosen Kommunikation in einem System, das eine erste Übertragungszeitintervall-, TTI-, Dauer und eine zweite TTI-Dauer, die kürzer als die erste TTI-Dauer ist, unterstützt, das UE (115) aufweisend:
Mittel zum Identifizieren einer ersten Aufwärtsverbindungs-Steuerkanalnachricht, die für eine erste Übertragungszeit während eines TTI mit der ersten TTI-Dauer geplant ist;
Mittel zum Identifizieren einer zweiten Aufwärtsverbindungs-Steuerkanalnachricht, die für eine zweite Übertragungszeit während eines TTI mit der zweiten TTI-Dauer geplant ist;
Mittel zum Bestimmen, dass die erste Übertragungszeit mit der zweiten Übertragungszeit überlappt; und
Mittel zum Übertragen, an eine Basisstation (105), der zweiten Aufwärtsverbindungs-Steuerkanalnachricht basierend zumindest teilweise auf der Bestimmung, dass die erste Übertragungszeit mit der zweiten Übertragungszeit überlappt, wobei die zweite Aufwärtsverbindungs-Steuerkanalnachricht einen Teil eines periodischen Kanalzustandsinformations-, P-CSI-, Berichts aufweist, der der ersten TTI-Dauer zugeordnet ist, und Unterlassen von Übertragen der ersten Aufwärtsverbindungs-Steuerkanalnachricht basierend zumindest teilweise auf der Bestimmung, dass die erste Übertragungszeit mit der zweiten Übertragungszeit überlappt.

11. Eine Basisstation (105) zur drahtlosen Kommunikation in einem System, das eine erste Übertragungszeitintervall-, TTI-, Dauer und eine zweite TTI-Dauer, die kürzer als die erste TTI-Dauer ist, unterstützt, die Basisstation (105) aufweisend:
Mittel zum Planen eines Benutzergeräts, UE (115), für eine erste Aufwärtsverbindungs-Steuerkanalnachricht mit einer ersten Übertragungszeit während eines TTI mit der ersten TTI-Dauer;
Mittel zum Planen des UE (115) für eine zweite Aufwärtsverbindungs-Steuerkanalnachricht mit einer zweiten Übertragungszeit während eines zweiten TTI mit der zweiten TTI-Dauer, wobei die erste Übertragungszeit mit der zweiten Übertragungszeit überlappt;
Mittel zum Empfangen, von dem UE (115), der zweiten Aufwärtsverbindungs-Steuerkanalnachricht basierend zumindest teilweise auf der ersten Übertragungszeit, die mit der zweiten Übertragungszeit überlappt, wobei die zweite Aufwärtsverbindungs-Steuerkanalnachricht einen Teil eines periodischen Kanalzustandsinformations-, P-CSI-, Berichts aufweist, der der ersten TTI-Dauer zugeordnet ist; und
Mittel zum Bestimmen, dass das UE (115) Übertragen der ersten Aufwärtsverbindungs-Steuerkanalnachricht unterlassen hat basierend zumindest teilweise auf der ersten Übertragungszeit, die mit der zweiten Übertragungszeit überlappt.

## Revendications

1. Un procédé de communication sans fil dans un système qui prend en charge une première durée d'intervalle de temps de transmission, TTI, et une deuxième durée de TTI qui est inférieure à la première durée de TTI, le procédé comprenant :
l'identification (1205), au niveau d'un équipement utilisateur, UE (115), d'un premier message de canal de contrôle de liaison montante planifié pour un premier temps de transmission durant un TTI ayant la première durée de TTI ;
l'identification (1210), au niveau de l'UE (115), d'un deuxième message de canal de contrôle de liaison montante planifié pour un deuxième temps de transmission durant un TTI ayant la deuxième durée de TTI ;
la détermination (1215), au niveau de l'UE (115), que le premier temps de transmission chevauche le deuxième temps de transmission ; et
la transmission (1220), de l'UE (115) à une station de base (105), du deuxième message de canal de contrôle de liaison montante sur la base au moins en partie de la détermination que le premier temps de transmission chevauche le deuxième temps de transmission, dans lequel le deuxième message de canal de contrôle de liaison montante comprend une partie d'un rapport d'information d'état de canal périodique, P-CSI, associé à la première durée de TTI et la non-transmission du premier message de canal de contrôle de liaison montante sur la base au moins en partie de la détermination que le premier temps de transmission chevauche le deuxième temps de transmission.

2. Le procédé selon la revendication 1, comprenant en outre :
la détermination de la partie du rapport de P-CSI à inclure dans le deuxième message de canal de contrôle de liaison montante sur la base au moins en partie de la deuxième durée de TTI ou d'un nombre de blocs de ressource utilisés pour une transmission du deuxième message de canal de contrôle de liaison montante, ou des deux.

3. Le procédé selon la revendication 1, comprenant en outre :
la réception d'une configuration de transmission de liaison montante simultanée à partir de la station de base (105), dans lequel la transmission est basée au moins en partie sur la configuration de transmission de liaison montante simultanée.

4. Le procédé selon la revendication 1, comprenant en outre :
l'identification d'une puissance de transmission maximale ; et
l'identification d'une première puissance de transmission et d'une deuxième puissance de transmission, dans lequel le premier message de canal de contrôle de liaison montante est transmis en utilisant la première puissance de transmission, le deuxième message de canal de contrôle de liaison montante est transmis en utilisant la deuxième puissance de transmission, et une somme de la première puissance de transmission et de la deuxième puissance de transmission est inférieure ou égale à la puissance de transmission maximale.

5. Le procédé selon la revendication 4, comprenant en outre :
la réception d'un paramètre de division de puissance à partir de la station de base (105), dans lequel la première puissance de transmission et la deuxième puissance de transmission sont identifiées sur la base au moins en partie du paramètre de division de puissance.

6. Un procédé de communication sans fil dans un système qui prend en charge une première durée d'intervalle de temps de transmission, TTI, et une deuxième durée de TTI qui est inférieure à la première durée de TTI, le procédé comprenant :
la planification (1505), par une station de base (105), d'un équipement utilisateur, UE (115), pour un premier message de canal de contrôle de liaison montante avec un premier temps de transmission durant un TTI ayant la première durée de TTI ;
la planification (1510), par la station de base (105), de l'UE (115) pour un deuxième message de canal de contrôle de liaison montante avec un deuxième temps de transmission durant un deuxième TTI ayant la deuxième durée de TTI, dans lequel le premier temps de transmission chevauche le deuxième temps de transmission ; et
la réception, au niveau de la station de base (105) à partir de l'UE (115), du deuxième message de canal de contrôle de liaison montante sur la base au moins en partie du premier temps de transmission chevauchant le deuxième temps de transmission, dans lequel le deuxième message de canal de contrôle de liaison montante comprend une partie d'un rapport d'information d'état de canal périodique, P-CSI, associé à la première durée de TTI et la détermination que l'UE (115) n'a pas transmis le premier message de canal de contrôle de liaison montante sur la base au moins en partie du premier temps de transmission chevauchant le deuxième temps de transmission.

7. Le procédé selon la revendication 6, comprenant en outre :
la transmission d'une configuration de transmission de liaison montante simultanée à l'UE (115), dans lequel la réception est basée au moins en partie sur la configuration de transmission de liaison montante simultanée.

8. Le procédé selon la revendication 7, comprenant en outre :
la transmission d'une configuration de transmission de liaison montante simultanée mise à jour à l'UE (115).

9. Le procédé selon la revendication 6, comprenant en outre :
la transmission d'un paramètre de commutation à l'UE (115), dans lequel la réception du premier message de canal de contrôle de liaison montante ou du deuxième message de canal de contrôle de liaison montante, ou des deux, est basée au moins en partie sur le paramètre de commutation.

10. Un équipement utilisateur, UE (115) pour la communication sans fil dans un système qui prend en charge une première durée d'intervalle de temps de transmission, TTI, et une deuxième durée de TTI qui est inférieure à la première durée de TTI, l'UE (115) comprenant :
un moyen pour identifier un premier message de canal de contrôle de liaison montante planifié pour un premier temps de transmission durant un TTI ayant la première durée deTTI;
un moyen pour identifier un deuxième message de canal de contrôle de liaison montante planifié pour un deuxième temps de transmission durant un TTI ayant la deuxième durée deTTI;
un moyen pour déterminer que le premier temps de transmission chevauche le deuxième temps de transmission ; et
un moyen pour transmettre, à la station de base (105), le deuxième message de canal de contrôle de liaison montante sur la base au moins en partie de la détermination que le premier temps de transmission chevauche le deuxième temps de transmission, dans lequel le deuxième message de canal de contrôle de liaison montante comprend une partie d'un rapport d'information d'état de canal périodique, P-CSI, associé à la première durée de TTI et ne pas transmettre le premier message de canal de contrôle de liaison montante sur la base au moins en partie de la détermination que le premier temps de transmission chevauche le deuxième temps de transmission.

11. Une station de base (105) pour la communication sans fil dans un système qui prend en charge une première durée d'intervalle de temps de transmission, TTI, et une deuxième durée de TTI qui est inférieure à la première durée de TTI, la station de base (105) comprenant :
un moyen pour planifier un équipement utilisateur, UE (115), pour un premier message de canal de contrôle de liaison montante avec un premier temps de transmission durant un TTI ayant la première durée de TTI ;
un moyen pour planifier l'UE (115) pour un deuxième message de canal de contrôle de liaison montante avec un deuxième temps de transmission durant un deuxième TTI ayant la deuxième durée de TTI, dans lequel le premier temps de transmission chevauche le deuxième temps de transmission ;
un moyen pour recevoir, à partir de l'UE (115), le deuxième message de canal de contrôle de liaison montante sur la base au moins en partie du premier temps de transmission chevauchant le deuxième temps de transmission, dans lequel le deuxième message de canal de contrôle de liaison montante comprend une partie d'un rapport d'information d'état de canal périodique, P-CSI, associé à la première durée de TTI ; et
un moyen pour déterminer que l'UE (115) n'a pas transmis le premier message de canal de contrôle de liaison montante sur la base au moins en partie du premier temps de transmission chevauchant le deuxième temps de transmission.
